# EUROPEAN PATENT APPLICATION

(11) **EP 4 333 115 A1**
(43) Date of publication of application: **06.03.2024**
(21) Application number: 21945240.6
(22) Date of filing: 29.11.2021
(51) Int. Cl.: H01M 4/14, H01M 4/20, H01M 4/62, H01M 10/06, H01M 10/12, H01M 10/44, H01M 10/48

(54) **CONTROL VALVE-TYPE LEAD STORAGE BATTERY, MANUFACTURING METHOD THEREFOR, AND POWER STORAGE SYSTEM HAVING CONTROL VALVE-TYPE LEAD STORAGE BATTERY**

(30) Priority: 08.06.2021 JP 2021095957
(71) Applicant: GS Yuasa International Ltd., Kisshoin, Minami-ku, Kyoto-shi, Kyoto 601-8520 (JP)
(72) Inventor: HAYASHI Kazuhiro, Kyoto-shi, Kyoto 601-8520 (JP); SEKIYA Kazuki, Kyoto-shi, Kyoto 601-8520 (JP); YAMADA Nobuharu, Kyoto-shi, Kyoto 601-8520 (JP)
(74) Representative: Isarpatent
(86) International application number: PCT/JP2021/043659
(87) International publication number: WO 2022/259571

(57) **Abstract**

A valve regulated lead-acid battery includes at least one cell including a positive electrode plate, a negative electrode plate, and an electrolyte solution. The positive electrode plate includes a positive electrode material. The negative electrode plate includes a negative electrode material. The negative electrode material contains a carbonaceous material. A specific surface area of the carbonaceous material determined by a BET method: Sc satisfies Sc ≥ 650 m²/g. A content of the carbonaceous material in the negative electrode material: Cc satisfies Cc ≥ 0.5 mass%. The valve regulated lead-acid battery is used, for example, for compact mobility or a vehicle under idling stop control.

## Description

### TECHNICAL FIELD

The present invention relates to a valve regulated lead-acid battery, a method of manufacturing the valve regulated lead-acid battery, and a power storage system including the valve regulated lead-acid battery.

### BACKGROUND ART

Valve regulated (sealed) lead-acid batteries are used in various applications in addition to in-vehicle applications (four-wheeled vehicle, compact mobility (for example, motorcycles), etc.) and industrial applications. The valve regulated lead-acid battery includes a negative electrode plate, a positive electrode plate, a separator interposed between the negative electrode plate and the positive electrode plate, and an electrolyte solution. As the separator, a nonwoven fabric of glass fiber or the like is used. Each of the positive electrode plate and the negative electrode plate contains an electrode material. The negative electrode material includes a carbon material, an organic expander, and the like in addition to lead as an active material.

Patent Document 1 proposes a composition for use in a negative active material in a valve regulated lead-acid battery, including a carbon material having a BET surface area from 150 m²/g to 2,000 m²/g and having a D₉₀-value greater than 5 pm, in which the amount of carbon material ranges from 0.1 wt % to 1.5 wt % based on the total weight of the composition.

Patent Document 2 proposes a lead acid battery including an electrode including an oxidized carbon black having the following properties:
a BET surface area ranging from 650 to 2100 m²/g;
an oil absorption number (OAN) ranging from 35 to 500 mL/100 g; and
at least one of the following properties:
   (a) a volatile content of at least 5.5 mass% relative to the total mass of the oxidized carbon black, as determined by mass loss at 950°C;
   (b) a total oxygen content of at least 3.5 mass% relative to the total mass of the oxidized carbon black;
   (c) a total titratable acidic group content of at least 0.5 µmol/m², as determined by Boehm's titration method; and
   (d) a total titratable acidic group content of at least 0.5 mmol/g, as determined by the Boehm's titration method.

Patent Document 3 proposes a negative active material composition, including: a carbonaceous material having a surface area of at least 250 m²/g; and an organic molecule expander, in which a ratio of the carbonaceous material to the expander ranges from 5:1 to 1:1, and the composition has a median pore size ranging from 0.8 pm to 4 pm.

Patent Document 4 proposes a lead-acid battery in which, in an additive to a negative active material of the lead-acid battery, lignin sulfonic acid sodium salt having a molecular weight of 50,000 to 65,000 and an organic sulfur content of 5.5 wt% or more and carbon black containing, as a raw material, heavy oil having a specific surface area of 1,200 to 1,300 m²/g and a DBP oil absorption amount of 450 to 550 ml/g are combined.

Patent Document 5 proposes a plate for a lead-acid battery in which an active material is lead or lead dioxide, a pore distribution of an active material layer in a state of charge has a maximum value in each of a pore region A having a pore size ranging from 0.8 to 10 pm and a pore region B having a pore size ranging from 0.01 to 0.2 pm, and the plate has a pore structure in a distribution state clearly separated into at least two states.

Patent Document 6 proposes a lead-acid battery including a separator retaining an electrolyte solution, a positive electrode plate, a negative electrode plate, and a container, in which a negative electrode material of the negative electrode plate contains bisphenols condensate, and a theoretical capacity ratio B/A of a theoretical capacity B of the negative electrode material to a theoretical capacity A of a positive electrode material of the positive electrode plate is 0.85 or more and 1.2 or less.

Patent Document 7 proposes a lead-acid battery in which, in a positive electrode plate for a lead-acid battery using a powder containing, as a main component, lead monoxide having an average particle size of 1 to 10 pm, a powder containing, as a main component, trilead tetroxide having an average particle size of 1 to 3 pm, and a pore-forming additive, a pore size volume having a pore size of 1 pm or more is 30 to 50% with respect to the total pore volume.

### PRIOR ART DOCUMENTS

### PATENT DOCUMENTS

Patent Document 1: JP-W-2015-537345
Patent Document 2: JP-W-2018-522379
Patent Document 3: JP-W-2015-534709
Patent Document 4: JP-A-2007-273367
Patent Document 5: JP-A-10-69900
Patent Document 6: WO 2015/079668 A
Patent Document 7: JP-A-11-162456

### SUMMARY OF THE INVENTION

### PROBLEMS TO BE SOLVED BY THE INVENTION

The lead-acid battery is sometimes used in a poor charged state called a partial state of charge (PSOC). For example, a lead-acid battery mounted on a vehicle subjected to idling stop (Idle Reduction or Start-Stop) control is used in the PSOC. When the lead-acid battery is used in the PSOC, stratification easily proceeds gradually in which a specific gravity of an electrolyte solution in an upper portion of the battery decreases and the specific gravity of the electrolyte solution in a lower portion of the battery increases. As the stratification proceeds, lead sulfate remarkably accumulates in a lower portion of the negative electrode plate, and sulfation in which crystals of lead sulfate are generated is likely to occur. As a result, the capacity is reduced, and the plate is deteriorated due to an uneven charge-discharge reaction, so that the life of the lead-acid battery is shortened. In the present specification, the idling stop may be simply referred to as "IS".

Various techniques for suppressing accumulation of lead sulfate have been studied in a lead-acid battery for a four-wheeled vehicle. However, a lead-acid battery for a four-wheeled vehicle under IS control and a lead-acid battery for compact mobility under IS control are different in a level of a state of charge (SOC) when a load current in the IS is switched to a cranking current for restarting an engine. Thus, even if the technique in the conventional lead-acid battery for a four-wheeled vehicle is applied to a lead-acid battery for a motorcycle, the effect of suppressing accumulation of lead sulfate may not be obtained.

### MEANS FOR SOLVING THE PROBLEMS

One aspect of the present invention relates to a valve regulated lead-acid battery comprising:
at least one cell including a positive electrode plate, a negative electrode plate, and an electrolyte solution,
wherein the positive electrode plate includes a positive electrode material,
the negative electrode plate includes a negative electrode material and a negative current collector,
the negative electrode material contains a carbonaceous material,
a specific surface area of the carbonaceous material determined by a BET method: Sc satisfies Sc ≥ 650 m²/g,
a content of the carbonaceous material in the negative electrode material: Cc satisfies Cc ≥ 0.5 mass%, and
the valve regulated lead-acid battery is used for compact mobility.

Another aspect of the present invention relates to a valve regulated lead-acid battery comprising:
at least one cell including a positive electrode plate, a negative electrode plate, and an electrolyte solution,
wherein the positive electrode plate includes a positive electrode material,
the negative electrode plate includes a negative electrode material and a negative current collector,
the negative electrode material contains a carbonaceous material,
a specific surface area of the carbonaceous material determined by a BET method: Sc satisfies Sc ≥ 650 m²/g,
a content of the carbonaceous material in the negative electrode material: Cc satisfies Cc ≥ 0.5 mass%,
the valve regulated lead-acid battery is used for a vehicle, and
the vehicle is subjected to idling stop control when a state of charge: SOC of the valve regulated lead-acid battery is equal to or more than a threshold of 90% or more, and is not subjected to the idling stop control when the SOC of the valve regulated lead-acid battery is less than the threshold.

Still another aspect of the present invention relates to a power storage system comprising:
a valve regulated lead-acid battery;
a vehicle that receives power supply from the valve regulated lead-acid battery; and
a state-of-charge controller that controls a state of charge: SOC of the valve regulated lead-acid battery,
wherein the valve regulated lead-acid battery includes at least one cell including a positive electrode plate, a negative electrode plate, and an electrolyte solution,
the positive electrode plate includes a positive electrode material,
the negative electrode plate includes a negative electrode material and a negative current collector,
the negative electrode material contains a carbonaceous material,
a specific surface area of the carbonaceous material determined by a BET method: Sc satisfies Sc ≥ 650 m²/g,
a content of the carbonaceous material in the negative electrode material: Cc satisfies Cc ≥ 0.5 mass%, and
the vehicle is subjected to idling stop control when the state of charge: SOC of the valve regulated lead-acid battery is equal to or more than a threshold of 90% or more, and is not subjected to the idling stop control when the SOC of the valve regulated lead-acid battery is less than the threshold.

### ADVANTAGES OF THE INVENTION

Accumulation of lead sulfate in the negative electrode plate of the valve regulated lead-acid battery can be suppressed.

### BRIEF DESCRIPTION OF THE DRAWINGS

Fig. 1 is a cross-sectional view schematically illustrating a structure of a lead-acid battery according to an embodiment of the present invention.
Fig. 2 is a block diagram schematically illustrating a configuration of an energy storage system according to an embodiment of the present invention.
Fig. 3 is a graph illustrating a relationship between a content Cc of a carbonaceous material in a negative electrode material and an added amount Ce of an organic expander in the negative electrode material, which is derived using carbonaceous materials having different BET specific surface areas Sc.
Fig. 4 is a graph illustrating a relationship between the content Cc of the carbonaceous material and an amount of lead sulfate accumulated.
Fig. 5 is a graph illustrating a relationship between the BET specific surface area Sc of the carbonaceous material and the amount of lead sulfate accumulated.

### MODE FOR CARRYING OUT THE INVENTION

While novel features of the present invention are set forth in the appended claims, the present invention will be better understood in terms of both construction and content by the following detailed description of the drawings, taken in conjunction with other objects and features of the present invention.

Compact mobility (for example, motorcycle) has a higher risk of overturning than four-wheeled vehicles and the like. Thus, use of flooded-type (vent type) lead-acid batteries is limited in the compact mobility, and in recent years, a valve regulated lead-acid battery (VRLA) tends to be employed. In recent years, compact mobility under idling stop (IS) control has also been developed. Examples of the compact mobility on which the VRLA can be mounted include an idling start-stop vehicle, a micro hybrid vehicle, and a mild hybrid vehicle. These include compact mobility that is already subjected to IS control, and compact mobility that is likely to be subjected to IS control in the near future. Thus, even in these VRLAs for compact mobility, accumulation of lead sulfate in the negative electrode plate due to use in the PSOC state becomes a problem.

A four-wheeled vehicle under IS control includes a battery management system (BMS) because it is necessary to control charging and discharging of a mounted battery with high accuracy. The BMS incorporates a state-of-charge controller that controls the state of charge (SOC) of the lead-acid battery. In a lead-acid battery for a four-wheeled vehicle under IS control, it is necessary to secure high charge acceptability in regenerative charging during deceleration. Thus, the state-of-charge controller of the BMS precisely controls the SOC of the lead-acid battery to be relatively low (for example, 70% or more and less than 90%). This makes it possible to charge the lead-acid battery with regenerative energy without waste as much as possible at the time of deceleration of the vehicle. On the other hand, the compact mobility using the lead-acid battery usually does not include the BMS, and charge control of regenerative energy is not currently performed. Thus, in such compact mobility, the state-of-charge controller of the power storage system controls the SOC of the lead-acid battery to be sufficiently higher (for example, 90% or more) than that of the lead-acid battery for a four-wheeled vehicle even during an IS control period. Even when the charge is controlled so as to achieve such a high SOC, a poor charged state is continued, which causes a problem of accumulation of lead sulfate in the negative electrode plate. As described above, the SOC in a discharge mode of the IS control is different between the lead-acid battery for a four-wheeled vehicle and the lead-acid battery for compact mobility. Thus, even if the technique for suppressing accumulation of lead sulfate in the lead-acid battery for a four-wheeled vehicle is directly applied to the lead-acid battery for compact mobility, accumulation of lead sulfate may not be suppressed.

More specifically, in the lead-acid battery for a four-wheeled vehicle under IS control, when a carbonaceous material is contained to some extent in a negative electrode material, an effect of suppressing accumulation of lead sulfate is obtained due to high conductivity of the carbonaceous material. As the carbonaceous material, there are carbonaceous materials having specific surface areas determined by various BET methods (hereinafter, the specific surface area is referred to as the BET specific surface area). However, the effect of suppressing accumulation of lead sulfate as described above in the lead-acid battery for a four-wheeled vehicle is higher when the content of the carbonaceous material is large regardless of the BET specific surface area of the carbonaceous material. Thus, in the lead-acid battery for a four-wheeled vehicle, the carbonaceous material having a relatively small BET specific surface area, such as inexpensive acetylene black, is frequently used for the negative electrode plate. The above effect is similarly obtained in both the flooded-type lead-acid battery and the VRLA.

However, in the VRLA for compact mobility under IS control, it has become clear that the effect of suppressing accumulation of lead sulfate cannot be obtained even when a relatively large amount of the carbonaceous material having a small BET specific surface area is used for the negative electrode plate. That is, in the accumulation suppression of lead sulfate, it has become clear that a behavior indicated by the BET specific surface area of the carbonaceous material is different between the lead-acid battery for a four-wheeled vehicle under IS control and the VRLA for compact mobility under IS control. Such a difference in behavior indicated by the BET specific surface area of the carbonaceous material between the lead-acid battery for a four-wheeled vehicle and the VRLA for compact mobility has not been known heretofore.

In view of such findings, a VRLA according to one aspect of the present invention is used for compact mobility, and includes at least one cell including a positive electrode plate, a negative electrode plate, and an electrolyte solution. The positive electrode plate includes a positive electrode material. The negative electrode plate includes a negative electrode material and a negative current collector. The negative electrode material contains a carbonaceous material. The BET specific surface area of the carbonaceous material: Sc satisfies Sc ≥ 650 m²/g. The content of the carbonaceous material in the negative electrode material: Cc satisfies Cc ≥ 0.5 mass%.

A VRLA according to another aspect of the present invention is used for a vehicle, and the vehicle is configured to be subjected to IS control when an SOC of the VRLA is equal to or more than a threshold of 90% or more, and not to be subjected to IS control when the SOC of the VRLA is less than the threshold. The VRLA includes at least one cell including a positive electrode plate, a negative electrode plate, and an electrolyte solution. The positive electrode plate includes a positive electrode material. The negative electrode plate includes a negative electrode material and a negative current collector. The negative electrode material contains a carbonaceous material. The BET specific surface area of the carbonaceous material: Sc satisfies Sc ≥ 650 m²/g. The content of the carbonaceous material in the negative electrode material: Cc satisfies Cc ≥ 0.5 mass%.

The present invention also comprises a method of manufacturing the VRLA described above. The method of manufacturing the VRLA comprising:
preparing a negative electrode paste containing a lead powder, the carbonaceous material, water, and sulfuric acid;
producing a non-formed negative electrode plate by applying or filling the negative electrode paste onto or into a negative current collector; and
forming the non-formed negative electrode plate to obtain a negative electrode plate including a negative electrode material and the negative current collector.

The present invention also includes a power storage system including the VRLA, a vehicle that receives power supply from the VRLA, and a state-of-charge controller that controls the SOC of the VRLA.

A power storage system according to still another aspect of the present invention includes a VRLA, a vehicle that receives power supply from the VRLA, and a state-of-charge controller that controls an SOC of the VRLA. The VRLA includes at least one cell including a positive electrode plate, a negative electrode plate, and an electrolyte solution. The positive electrode plate includes a positive electrode material. The negative electrode plate includes a negative electrode material. The negative electrode material contains a carbonaceous material. The BET specific surface area of the carbonaceous material: Sc satisfies Sc ≥ 650 m²/g. The content of the carbonaceous material in the negative electrode material: Cc satisfies Cc ≥ 0.5 mass%. In the power storage system, the vehicle is subjected to IS control when the SOC of the VRLA is equal to or more than the threshold of 90% or more, and is not subjected to IS control when the SOC of the VRLA is less than the threshold.

The compact mobility typically does not include a BMS. The VRLA for compact mobility is configured to be charged and discharged in a PSOC state close to full charge for both starting and IS. More specifically, the VRLA is designed such that the IS control is performed when the SOC of the VRLA is equal to or more than the threshold of 90% or more, and the IS control is not performed when the SOC of the VRLA is less than the threshold.

According to the VRLA or the power storage system, the negative electrode material contains a carbonaceous material having a BET specific surface area Sc ≥ 650 m²/g with a content Cc ≥ 0.5 mass%. Thus, accumulation of lead sulfate in the negative electrode plate can be suppressed. Since a charge-discharge reaction in the plate is performed more uniformly, deterioration of the plate is suppressed. Thus, life performance of the VRLA can be enhanced.

On the other hand, when the negative electrode material of the VRLA (or VRLA included in the power storage system) contains a small amount of carbonaceous material of Cc < 0.5 mass%, an amount of lead sulfate accumulated hardly changes between Sc < 650 m²/g and Sc ≥ 650 m²/g, and the effect of suppressing accumulation of lead sulfate is hardly observed. When the negative electrode material contains a carbonaceous material having a content Cc ≥ 0.5 mass% and Sc < 650 m²/g, the effect of increasing Cc is hardly obtained, and the effect of suppressing accumulation of lead sulfate is not obtained.

In the lead-acid battery for a four-wheeled vehicle, when the negative electrode material contains a small amount of carbonaceous material of Cc < 0.5 mass%, the amount of lead sulfate accumulated hardly changes between Sc < 650 m²/g and Sc ≥ 650 m²/g, and the effect of suppressing accumulation of lead sulfate is hardly observed. In this case, the results are almost the same as those in the VRLA described above. When the negative electrode material contains the carbonaceous material of Cc ≥ 0.5 mass%, the same level of effect of suppressing accumulation of lead sulfate is obtained when both Sc < 650 m²/g and Sc ≥ 650 m²/g are satisfied. That is, in the lead-acid battery for a four-wheeled vehicle, the effect of suppressing accumulation of lead sulfate depends only on the content Cc of the carbonaceous material, and does not depend on the BET specific surface area Sc of the carbonaceous material. Such a tendency is not different between a flooded-type lead-acid battery for a four-wheeled vehicle and the VRLA for a four-wheeled vehicle. On the other hand, in the VRLA (or VRLA included in the power storage system), the effect of suppressing accumulation of lead sulfate depends on both the content Cc of the carbonaceous material and the BET specific surface area Sc of the carbonaceous material.

Details of the mechanism in which the behavior indicated by the BET specific surface area of the carbonaceous material in the accumulation suppression of lead sulfate is different between the VRLA and the lead-acid battery for a four-wheeled vehicle as described above are unknown, but are presumed as follows.

In the lead-acid battery for a four-wheeled vehicle that is charged and discharged in a relatively low SOC, the conductivity of the negative electrode material is lower than that in a case where the lead-acid battery is charged and discharged in a high SOC. Thus, by adding a certain amount of the carbonaceous material to the negative electrode material, the effect of improving the conductivity of the negative electrode material remarkably appears. It is considered that when the carbonaceous material having a high BET specific surface area Sc is used, a large amount of electrolyte solution can be held around lead as an active material. However, in the lead-acid battery charged and discharged in a relatively low SOC, it is considered that the influence of the effect of improving the conductivity of the negative electrode material due to the addition of the carbonaceous material is greater than the effect due to retention of a large amount of electrolyte solution around lead. As a result, it is considered that accumulation of lead sulfate in the negative electrode plate is suppressed as the negative electrode material contains a certain amount of carbonaceous material regardless of the difference in the BET specific surface area Sc.

On the other hand, in the VRLA charged and discharged in a relatively high SOC, the negative electrode material contains a large amount of lead having high conductivity. Thus, even when the carbonaceous material is added to the negative electrode material, the effect of improving the conductivity associated with the addition of the carbonaceous material hardly appears. When the conductivity of the negative electrode material is high, it is considered that the charge-discharge reaction is greatly affected by the ion conductivity of the electrolyte solution around lead. The VRLA contains less electrolyte solution present around lead than the flooded-type lead-acid battery. When the carbonaceous material having a BET specific surface area Sc of 650 m²/g or more is used at a content Cc of 0.5 mass% or more, a large amount of electrolyte solution can be retained around lead. As a result, the ion conductivity around lead is enhanced, the charge-discharge reaction proceeds more smoothly. That is, it can be said that by using the carbonaceous material as described above, a reaction at an interface between lead and the electrolyte solution is promoted. As a result, it is considered that accumulation of lead sulfate in the negative electrode plate is suppressed.

As described above, the VRLA is preferably a VRLA used for a vehicle which is subjected to IS control when the SOC is equal to or more than the threshold of 90% or more, and not subjected to IS control when the SOC is less than the threshold. In this case, the difference in behavior indicated by the BET specific surface area of the carbonaceous material in the accumulation suppression of lead sulfate becomes clearer between the VRLA and the lead-acid battery for a four-wheeled vehicle as described above. Thus, the effect of suppressing accumulation of lead sulfate is more effectively exhibited.

An organic expander may be further added to the negative electrode material. In the method of manufacturing the VRLA, the negative electrode paste may further contain an organic expander. By using the organic expander, low-temperature high rate (HR) discharge performance of the VRLA can be improved.

When the negative electrode material contains an organic expander, the organic expander is adsorbed to the carbonaceous material, and the shrink-proofing effect of the organic expander is less likely to be exhibited. When the carbonaceous material having a large specific surface area Sc is used, an influence of adsorption of the organic expander by the carbonaceous material is likely to appear. From the viewpoint of securing higher low-temperature HR discharge performance, the content Ce (mass%) of the organic expander in the negative electrode material preferably satisfies Ce > 0.368 Cc + 0.054. However, in this case, as the carbonaceous material, a carbonaceous material having a specific surface area Sc satisfying 650 m²/g ≤ Sc ≤ 1000 m²/g is used. When an added amount Ce of the organic expander is controlled within the above range, a hydrogen overvoltage on the negative electrode side tends to increase although it is within a proper range. Thus, even when the VRLA is used at a relatively high temperature, a charge current at the time of constant voltage charge can be kept low. Accordingly, generation of oxygen gas from the positive electrode plate is suppressed, and heat generation accompanying an absorption reaction of oxygen gas by the negative electrode material is suppressed. This makes it possible to suppress a decrease in the electrolyte solution, which is also advantageous from the viewpoint of securing excellent life performance.

The added amount Ce of the organic expander preferably satisfies 0.372 Cc + 0.092 ≤ Ce ≤ 0.373 Cc + 0.249. By setting 0.372 Cc + 0.092 ≤ Ce, the effect of suppressing the low-temperature HR discharge performance and the decrease in the electrolyte solution can be further enhanced. By setting Ce ≤ 0.373 Cc + 0.249, excessive coating of the carbonaceous material and lead with the organic expander is suppressed. High conductivity of the negative electrode material is maintained, so that deterioration of the charge acceptability can be suppressed.

In applications where the above VRLA is used, such as compact mobility, the BMS is typically not equipped, unlike four-wheeled vehicles. Since it is difficult to control charging and discharging according to a change in the temperature of the lead-acid battery, the performance of the VRLA is greatly affected by an outside air temperature. The compact mobility is utilized in a variety of environments, from hot areas to cold areas. Thus, the VRLA to be mounted is required to have excellent balance among the accumulation suppression of lead sulfate, the low-temperature HR discharge performance, the charge acceptability, and a liquid reduction suppression effect in a wide temperature range. In order to secure such a plurality of performance at a high level in a well-balanced manner, an extremely high technology is actually required. On the other hand, by using a carbonaceous material having a specific surface area Sc of 650 m²/g ≤ Sc ≤ 1,000 m²/g and adjusting the added amount Ce of the organic expander according to the content Cc of the carbonaceous material by the above formula, the balance of the performance as described above can be adjusted with high accuracy. Thus, even use in various regions in the world can exhibit excellent performance, and can obtain stable quality.

The VRLA is required to have high low-temperature HR discharge performance. For example, in the compact mobility such as a motorcycle, the VRLA may be started in a low temperature environment, and therefore, high low-temperature HR discharge performance is required. In order to secure high low-temperature HR discharge performance in the VRLA, it is effective to suppress sulfation in the negative electrode. From the viewpoint of suppressing sulfation in the negative electrode, it is generally advantageous to relatively increase a ratio of the mass of the negative electrode material (Negative Active Material: NAM) to the mass of the positive electrode material (Positive Active Material: PAM): NAM/PAM ratio. On the other hand, in the VRLA according to one aspect and another aspect of the present invention, it is preferable to relatively reduce the NAM/PAM ratio. More specifically, the NAM/PAM ratio preferably satisfies NAM/PAM ratio < 1.21. When the content Cc of the carbonaceous material in the negative electrode material is 0.5 mass% or more, accumulation of lead sulfate is suppressed. Thus, even if the NAM/PAM ratio < 1.21, sufficient low-temperature HR discharge performance can be secured even when the lead-acid battery is left unused or used in the PSOC state. On the other hand, when the content Cc of the carbonaceous material in the negative electrode material is less than 0.5 mass%, even if the NAM/PAM ratio < 1.21, it is not possible to suppress a decrease in a retention rate of the low-temperature HR discharge performance when the lead-acid battery is left unused or used in the PSOC state. This is considered to be because, when the content Cc of the carbonaceous material is less than 0.5 mass%, accumulation of lead sulfate cannot be sufficiently suppressed because there are few conduction paths and the ion conductivity around lead is low, and sulfation proceeds.

By setting the NAM/PAM ratio < 1.21, the mass of the positive active material contained in the positive electrode material having a predetermined volume can be relatively increased. As a result, load per unit mass of the positive active material applied to the positive electrode material by the charge-discharge reaction is reduced. Thus, it is expected that deterioration of the positive electrode material is suppressed and performance related to the positive electrode are improved.

In recent years, the VRLA may be required to have excellent cycle performance (hereinafter, referred to as room temperature HR cycle performance) when a charge-discharge cycle including room-temperature HR discharge is repeated. For example, in motor acceleration of an engine, the room-temperature HR discharge is assumed. The room-temperature HR discharge is generally greatly affected by the reaction in the positive electrode.

In the VRLA described above, when the NAM/PAM ratio < 1.21, the positive electrode material may include pores having a pore diameter of 1 pm or more and 10 pm or less. In the present specification, pores having a pore diameter of 1 pm or more and 10 pm or less in the positive electrode material may be referred to as first pores. A ratio of the first pores in the positive electrode material may be 9% by volume or more. When the ratio of the first pores is in such a range, the room temperature HR cycle performance are greatly improved. Thus, it is easy to adjust a balance between the room-temperature HR discharge performance and the cycle performance when the charge-discharge cycle including the room-temperature HR discharge is repeated, and it is possible to achieve both the room-temperature HR discharge performance and the cycle life at a high level. The reason why such an effect is obtained is considered to be as follows. First, when the ratio of the first pores is 9% by volume or more, a large amount of the electrolyte solution can be retained in the positive electrode material, and a large number of reaction active points can be secured in the positive electrode material. Thus, high initial room-temperature HR performance can be obtained. When the ratio of the first pores is 9% by volume or more, diffusibility of the electrolyte solution in the positive electrode material is enhanced. In addition, by adjusting the NAM/PAM ratio to less than 1.21, deterioration of the positive electrode material is suppressed as described above. It is considered that the room-temperature HR cycle performance are greatly improved by these interactions.

### (Description of terminology)

### (Negative electrode material)

In the negative electrode plate, the negative electrode material is usually held by the negative current collector. The negative electrode material is a portion obtained by removing the negative current collector from the negative electrode plate. A member such as a mat or a pasting paper may be stuck to the negative electrode plate. Such a member (also referred to as a sticking member) is used integrally with the negative electrode plate and is thus included in the negative electrode plate. When the negative electrode plate includes the sticking member, the negative electrode material is a portion obtained by removing the negative current collector and the sticking member from the negative electrode plate.

### (BET specific surface area)

The specific surface area (BET specific surface area) determined by a BET (Brunauer-Emmett-Teller) method is a specific surface area determined using a BET equation by a gas adsorption method in which a nitrogen gas is used as an adsorption gas.

### (Content Cc of carbonaceous material in negative electrode material)

The content Cc of the carbonaceous material is a mass ratio (mass%) of the carbonaceous material contained in the negative electrode material, which is determined for the negative electrode plate taken out from the lead-acid battery in a fully charged state.

### (Organic expander)

The organic expander refers to an organic compound among compounds having a function of suppressing shrinkage of lead as a negative active material when charge-discharge of the lead-acid battery is repeated.

### (Added amount Ce of organic expander)

The added amount Ce of the organic expander is a mass ratio (mass%) of the organic expander added in preparing the negative electrode material or the negative electrode paste in the negative electrode material.

### (Positive electrode material)

In the positive electrode plate, the positive electrode material is held by the positive current collector. The positive electrode material is a portion obtained by removing the positive current collector from the positive electrode plate. A member such as a mat or pasting paper may be stuck to the positive electrode plate. Such a member (also referred to as a sticking member) is used integrally with the positive electrode plate and is thus included in the positive electrode plate. When the positive electrode plate includes the sticking member, the positive electrode material is a portion obtained by removing the positive current collector and the sticking member from the positive electrode plate.

### (Ratio of first pores)

As described above, the first pores mean pores having a pore diameter of 1 pm or more and 10 pm or less included in the positive electrode material. The ratio of the first pores in the positive electrode material means the ratio (% by volume) of the first pores to a total pore volume of the positive electrode material.

### (PAM/NAM ratio)

The NAM/PAM ratio is a ratio of the total mass of negative electrode materials contained in one cell of the VRLA to the total mass of positive electrode materials contained in one cell. When the VRLA includes two or more cells, each of the total masses of the negative electrode material and the positive electrode material is an average value of the total masses obtained for the two cells. When the VRLA includes three or more cells, each average value is obtained from one VRLA located at the end of the lead-acid battery and one cell located near the center.

### (State of charge (SOC))

The SOC indicates a ratio of a charged electricity amount to an amount of charge (100%) in the fully charged state of the VRLA. In the present specification, the fully charged state of 100% of the valve regulated lead-acid battery is a state where charge is finished according to the condition of full charge described in 8.2.2 (revised on March 20, 2004) of JIS D 5302: 2004.

The lead-acid battery in the fully charged state is a lead-acid battery obtained by fully charging a formed lead-acid battery. The full charge of the lead-acid battery may be performed immediately after formation may be performed after the lapse of time from formation so long as being performed after formation (for example, a lead-acid battery in use (preferably at the initial stage of use) after formation may be fully charged). The battery at the initial stage of use refers to a battery that has not been used for a long time and has hardly deteriorated.

### (Threshold of SOC)

The "threshold" of the SOC is a preset reference SOC, and the expression "reaching the threshold" means that the SOC becomes the threshold or an SOC in the vicinity of the threshold. The SOC in the vicinity of the threshold refers to a predetermined SOC equal to or less than the threshold and a predetermined SOC more than the threshold.

### (Valve regulated lead-acid battery for compact mobility and compact mobility)

The VRLA for compact mobility refers to the VRLA among lead-acid batteries included in the application range of IEC 60095-7: 2019 and the application range of JIS D 5302: 2004. The compact mobility refers to motorcycles and power sports vehicles to which these VRLAs are applied. The compact mobility includes, for example, motorcycles, motor tricycles, buggies (including both three-wheeled buggies and four-wheeled buggies), water skis, snowmobiles, and all-terrain vehicles. In the compact mobility, a VRLAfor compact mobility is mounted together with an engine.

### (Idling stop (IS))

The idling stop vehicle (IS vehicle) refers to a vehicle under idling stop (IS) control, and includes an idling stop system (idle reduction system). The idling stop system may be referred to as an ISS. The ISS refers to a system in which the engine is controlled to stop when the vehicle is parked or stopped. In the ISS, the current required for the vehicle is supplied by the battery mounted on the vehicle while the engine is stopped. In the ISS, while the engine is stopped, the engine is restarted when the SOC of the battery reaches a predetermined threshold. A period from stop of the engine by parking or stopping the vehicle to restart of the engine is referred to as an idling stop period (IS period). During the IS period, a load current corresponding to consumption by an electric system of the vehicle and a cranking current at the time of restarting the engine are discharged from the battery.

Hereinafter, the VRLA and the power storage system according to the embodiment of the present invention will be described more specifically. However, the present invention is not limited to the following embodiment.

### [VRLA]

### (Negative electrode plate)

The negative electrode plate usually includes a negative current collector and a negative electrode material, and the negative electrode material is held by the negative current collector.

### (Negative current collector)

The negative current collector may be prepared by casting lead (Pb) or a lead alloy, or may be prepared by processing a lead sheet or a lead alloy sheet. Examples of the processing method include expanding processing or punching processing. It is preferable to use the grid-like current collector as the negative current collector because the negative electrode material is easy to support.

The lead alloy used for the negative current collector may be any of a Pb-Ca-based alloy and a Pb-Ca-Sn-based alloy. The lead or lead alloys may further contain, as an additive element, at least one selected from the group consisting of Ba, Ag, Al, Bi, As, Se, Cu, and the like. The negative current collector may include a surface layer. The surface layer and the inner layer of the negative current collector may have different compositions. The surface layer may be provided in a part of the negative current collector. The surface layer may be provided in the lug part of the negative current collector. The surface layer of the lug part may contain Sn or a Sn alloy.

### (Negative electrode material)

The negative electrode material contains, as an essential component, a negative active material (lead or lead sulfate) that exhibits a capacity through a redox reaction. The negative active material in the state of charge is spongy lead, but the non-formed negative electrode plate is usually prepared using lead powder. The negative electrode material further contains a carbonaceous material as an additive. The negative electrode material may further contain an additive (organic expander, barium sulfate, etc.) other than the carbonaceous material.

### (Carbonaceous material)

Examples of the carbonaceous material contained in the negative electrode material include carbon black, graphite, hard carbon, soft carbon, and the like. Examples of the carbon black include acetylene black, furnace black, and lamp black. Furnace black also includes ketjen black (product name). The graphite may be a carbonaceous material including a graphite-type crystal structure and may be either artificial graphite or natural graphite. One kind of carbonaceous material may be used singly, or two or more kinds thereof may be used in combination.

In the present specification, among the carbonaceous materials, the carbonaceous material in which an intensity ratio I_{D}/I_{G} of a peak (D band) appearing in a range of 1,300 cm⁻¹ or more and 1,350 cm⁻¹ or less in a Raman spectrum to a peak (G band) appearing in a range of 1,550 cm⁻¹ or more and 1,600 cm⁻¹ or less is 0 or more and 0.9 or less is referred to as graphite. The graphite may be either artificial graphite or natural graphite.

The BET specific surface area Sc of the carbonaceous material is 650 m²/g or more. When the BET specific surface area Sc is less than 650 m²/g, it is difficult to sufficiently suppress accumulation of lead sulfate in the negative electrode plate even when the content of the carbonaceous material is 0.5 mass% or more. From the viewpoint of securing higher suppression of accumulation of lead sulfate, the BET specific surface area Sc is preferably 750 m²/g or more, and may be 800 m²/g or more. From the viewpoint of securing higher suppression of accumulation of lead sulfate, the BET specific surface area Sc is preferably 1,000 m²/g or less.

From the viewpoint of easily controlling the BET specific surface area Sc of the carbonaceous material within the above range, the carbonaceous material preferably contains at least furnace black (in particular, Ketjen black). The carbonaceous material may contain furnace black (in particular, Ketjen black) and other carbonaceous materials. When two or more kinds of carbonaceous materials are combined, the kind of the carbonaceous materials to be combined may be selected or the ratio may be adjusted so that the BET specific surface area Sc of the entire carbonaceous material falls within the above range.

The content Cc of the carbonaceous material in the negative electrode material is 0.5 mass% or more. When the content Cc of the carbonaceous material is less than 0.5 mass%, the effect of suppressing accumulation of lead sulfate in the negative electrode plate does not depend on the BET specific surface area Sc of the carbonaceous material. From the viewpoint of securing a higher effect of suppressing accumulation of lead sulfate, the content Cc of the carbonaceous material may be 0.75 mass% or more. The content Cc of the carbonaceous material is, for example, 3 mass% or less and may be 2 mass% or less.

The content Cc of the carbonaceous material may be 0.5 mass% or more and 3 mass% or less (or 2 mass% or less), or 0.75 mass% or more and 3 mass% or less (or 2 mass% or less).

### (Organic expander)

As the organic expander, for example, at least one selected from the group consisting of lignin compounds and synthetic organic expanders may be used.

Examples of the lignin compounds include lignin and lignin derivatives. Examples of the lignin derivative include lignin sulfonic acid or salts thereof (such as alkali metal salts (sodium salts and the like)), and the like.

The synthetic organic expander used in the lead-acid battery is usually an organic condensate (hereinafter, simply referred to as a condensate). The condensate is a compound that can be obtained using a condensation reaction. The condensate may contain a unit of an aromatic compound (hereinafter, also referred to as an aromatic compound unit). The unit of an aromatic compound refers to a unit derived from an aromatic compound incorporated in a condensate. That is, the aromatic compound unit is a residue of an aromatic compound. The condensate may contain one kind or two or more kinds of aromatic compound units.

Examples of the condensate include a condensate of an aromatic compound with an aldehyde compound. Such a condensate may be synthesized by reacting an aromatic compound with an aldehyde compound. Here, a condensate containing a sulfur element can be obtained by performing a reaction between an aromatic compound and an aldehyde compound in the presence of a sulfite or using an aromatic compound containing a sulfur element as an aromatic compound (for example, bisphenol S). For example, the sulfur element content in the condensate can be adjusted by adjusting at least one of the amount of the sulfite and the amount of the aromatic compound containing sulfur element. The method may be applied to the case of using other raw materials. The aromatic compound to be condensed for obtaining the condensate may be one kind or two or more kinds. The aldehyde compound may be an aldehyde (for example, formaldehyde), or a condensate (or a polymer) of an aldehyde. Examples of the aldehyde condensate (or polymer) include paraformaldehyde, trioxane, and tetraoxymethylene. The aldehyde compound may be used singly or in combination of two or more kinds thereof. Formaldehyde is preferable from the viewpoint of high reactivity with an aromatic compound.

The aromatic compound may have a sulfur-containing group. That is, the condensate may be an organic polymer containing a plurality of aromatic rings in the molecule and containing a sulfur element as a sulfur-containing group. The sulfur-containing group may be directly bonded to an aromatic ring contained in the aromatic compound, and for example, may be bonded to the aromatic ring as an alkyl chain having a sulfur-containing group. Among the sulfur-containing groups, a sulfonic acid group or a sulfonyl group which is in a stable form is preferable. The sulfonic acid group may exist in an acid form, or may exist in a salt form like a Na salt.

Examples of the aromatic ring of the aromatic compound include a benzene ring and a naphthalene ring. When the aromatic compound has a plurality of aromatic rings, the plurality of aromatic rings may be linked by a direct bond or a linking group (for example, an alkylene group (including an alkylidene group), a sulfone group), or the like. Examples of such a structure include bisarene structures (biphenyl, bisphenylalkane, bisphenylsulfone, and the like).

Examples of the aromatic compound include a compound having the aromatic ring and a functional group (hydroxy group, amino group, and the like). The functional group may be directly bonded to the aromatic ring, or may be bonded as an alkyl chain having a functional group. Note that the hydroxy group also includes salts of hydroxy group (-OMe). The amino group also includes salts of an amino group (salts with anions). Examples of Me include alkali metals (Li, K, Na, and the like) and Group 2 metals of the periodic table (Ca, Mg, and the like). The aromatic compound may have a sulfur-containing group and a substituent other than the functional group (for example, an alkyl group or an alkoxy group) in the aromatic ring.

The aromatic compound as the base of the aromatic compound unit may be at least one selected from the group consisting of a bisarene compound and a monocyclic aromatic compound.

Examples of the bisarene compound include a bisphenol compound, a hydroxybiphenyl compound, and a bisarene compound having an amino group (bisarylalkane compound having an amino group, bisarylsulfone compound having an amino group, biphenyl compound having an amino group, and the like). Among them, the bisphenol compound is preferable.

As the bisphenol compound, bisphenol A, bisphenol S, bisphenol F, and the like are preferable. For example, the bisphenol compound may contain at least one selected from the group consisting of bisphenol A and bisphenol S. By using bisphenol A or bisphenol S, the excellent anti-shrink effect on the negative electrode material can be obtained.

The bisphenol compound may have a bisphenol skeleton, and the bisphenol skeleton may have a substituent. That is, bisphenol A may have a bisphenol A skeleton, and the skeleton may have a substituent. Bisphenol S may have a bisphenol S skeleton, and the skeleton may have a substituent.

As the monocyclic aromatic compound, a hydroxymonoarene compound, an aminomonoarene compound, and the like are preferable. Among them, a hydroxymonoarene compound is preferable.

Examples of the hydroxymonoarene compound include a hydroxynaphthalene compound and a phenol compound. For example, it is preferable to use a phenolsulfonic acid compound which is a phenol compound (phenol sulfonic acid or a substitution product thereof). As described above, the phenolic hydroxy group also includes a salt of the phenolic hydroxy group (-OMe).

Examples of the aminomonoarene compound include an aminonaphthalene compound and an aniline compound (aminobenzenesulfonic acid, alkylaminobenzenesulfonic acid, etc.).

As described above, the negative electrode material contains a carbonaceous material having a relatively large BET specific surface area Sc. When such a carbonaceous material is used, the organic expander is adsorbed to the carbonaceous material, and it may be difficult to effectively exhibit the effect of the organic expander. From the viewpoint of more effectively exhibiting the effect by using the organic expander, the added amount Ce of the organic expander added to the negative electrode material is preferably determined according to the BET specific surface area Sc of the carbonaceous material. From the viewpoint of securing higher low-temperature HR discharge performance, the content Ce of the organic expander in the negative electrode material preferably satisfies Ce > 0.368 Cc + 0.054 (1). From the viewpoint of further enhancing the low-temperature HR discharge performance and the effect of suppressing the decrease in the electrolyte solution, the added amount Ce of the organic expander is preferably 0.372 Cc + 0.092 ≤ Ce (2). From the viewpoint of enhancing the effect of suppressing the deterioration of the charge acceptability, the added amount Ce of the organic expander preferably satisfies Ce ≤ 0.373 Cc + 0.249 (3). These relationships are established in a range in which the BET specific surface area Sc of the carbonaceous material is 650 m²/g or more (or 750 m²/g or more, or 800 m²/g or more) and 1,000 m²/g or less.

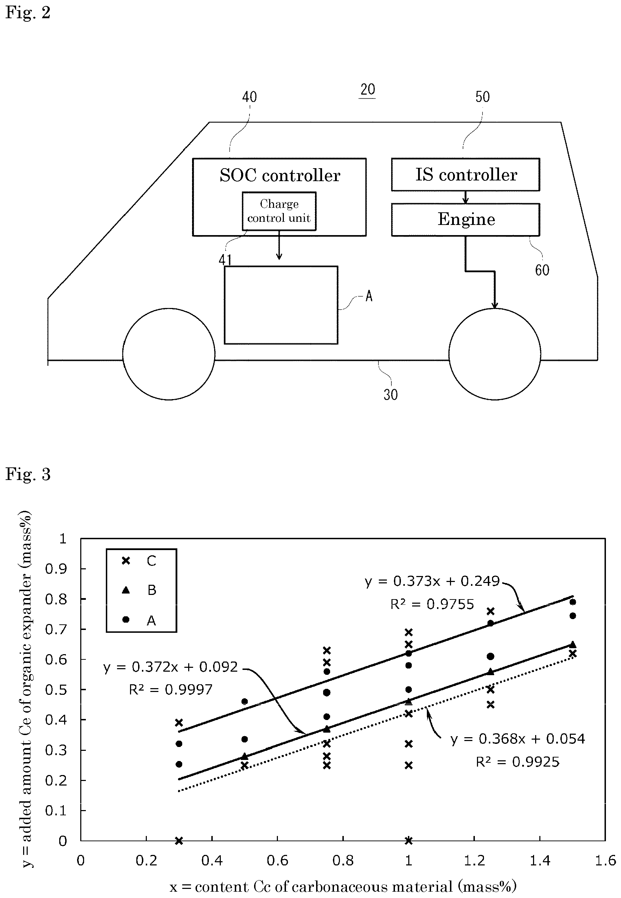

The relationships (1) to (3) are obtained from the results of evaluating the performance of the low-temperature HR discharge performance, the charge acceptability, and the decrease in the electrolyte solution by using a plurality of carbonaceous materials having different BET specific surface areas Sc. More specifically, the carbonaceous material having a BET specific surface area Sc in the above range is used, and the content Cc of the carbonaceous material and the added amount Ce of the organic expander are changed to perform the above evaluation. A relationship between the content Cc of the carbonaceous material and the added amount Ce of the organic expander at this time is illustrated in Fig. 3.

Each performance is evaluated by a procedure to be described later. Each performance is evaluated according to the following criteria.

### (Low-temperature HR discharge performance)

a: The low-temperature HR discharge duration time is 200 seconds or more.
b: The low-temperature HR discharge duration time is 180 seconds or more and less than 200 seconds.
c: The low-temperature HR discharge duration time is less than 180 seconds.

### (Charge acceptability)

a: 100-second current is 0.5 A or more and 0.7 A or less.
b: 100-second current is more than 0.7 A and 0.8 A or less.
c: 100-second current is more than 0.8 A or less than 0.5 A

### (Decrease in electrolyte solution)

a: The reduction amount of the electrolyte solution is less than 10 mass%.
b: The reduction amount of the electrolyte solution is 10 mass% or more and less than 15 mass%.
c: The reduction amount of the electrolyte solution is 15 mass% or more.

In Fig. 3, the results obtained by comprehensively evaluating the evaluation results of the respective performance according to the following criteria are plotted.
A: Both the low-temperature HR discharge performance and the charge acceptability are evaluated as a, and the decrease in electrolyte solution is evaluated as a or b.
B: The evaluation of the low-temperature HR discharge performance is b, the evaluation of the charge acceptability is a, the evaluation of the reduction amount of the electrolyte solution is a or b, or the evaluation of both the low-temperature HR discharge performance and the charge acceptability is b, and the evaluation of the decrease in the electrolyte solution is a.
C: The evaluation is not classified into either A or B.

For plotted data, for each Cc, an equation obtained by linear approximation of an upper limit point at which an overall evaluation is A is related to Formula (3) and, is Ce = 0.373 Cc + 0.249. Furthermore, for each Cc, an equation obtained by linear approximation of a point at which the overall evaluation is B is related to Formula (2) and, is Ce = 0.372 Cc + 0.092. In a point positioned below this equation, an equation obtained by linear approximation of an upper limit point at which the overall evaluation is C is related to Formula (1), and is Ce = 0.368 Cc + 0.054. In each approximate expression illustrated in Fig. 3, a numerical value represented by R² is a remainder term of linear approximation.

As illustrated in Fig. 3, at Ce ≤ 0.368 Cc + 0.054, the low-temperature HR discharge duration time is less than 180 seconds for most points, and when Formula (1) is satisfied, the low-temperature HR discharge duration time of 180 seconds or more is obtained. When Formula (2) is satisfied, a higher low-temperature HR discharge duration time is obtained, and the decrease in the electrolyte solution is suppressed. When Formula (3) is satisfied, higher charge acceptability can be obtained.

### (Barium sulfate)

The negative electrode material may contain barium sulfate. The content of barium sulfate in the negative electrode material is, for example, 0.05 mass% or more and may be 0.10 mass% or more. The content of barium sulfate in the negative electrode material is, for example, 3 mass% or less and may be 2 mass% or less.

The content of barium sulfate in the negative electrode material may be 0.05 mass% or more and 3 mass% or less, 0.05 mass% or more and 2 mass% or less, 0.10 mass% or more and 3 mass% or less, or 0.10 mass% or more and 2 mass% or less.

### (Analysis of negative electrode material or constituent components)

Hereinafter, a method of analyzing the negative electrode material or constituent components thereof will be described.

### (1) Quantification of negative electrode material

The lead-acid battery in the full charge state is disassembled to obtain a negative electrode plate to be analyzed. The obtained negative electrode plate is washed with water to remove sulfuric acid from the negative electrode plate. The washing with water is performed until it is confirmed that color of a pH test paper does not change by pressing the pH test paper against the surface of the negative electrode plate washed with water. However, the washing with water is performed within two hours. The negative electrode plate washed with water is dried at 60 ± 5°C in a reduced pressure environment for about six hours. When the negative electrode plate includes a sticking member, the sticking member is removed from the negative electrode plate by peeling. The mass of the dried product (negative electrode plate) is measured. Next, the negative electrode material is scraped and separated from the negative current collector to obtain a sample (hereinafter, referred to as sample A). The sample A is ground as necessary and subjected to analysis of constituent components of the negative electrode material.

The negative electrode material adhering to the negative current collector is removed by performing ultrasonic treatment while the negative current collector is immersed in water. The resulting negative current collector is washed with water and dried, and then the mass of the negative current collector is measured. The mass of the negative electrode material is obtained by subtracting the mass of the negative current collector from the mass of the negative electrode plate. The mass of the negative electrode material in the cell is obtained by summing the masses of the negative electrode materials for all the negative electrode plates in the cell.

### (2) Qualitative analysis of organic expander in negative electrode material

The ground sample A is immersed in a 1 mol/L sodium hydroxide (NaOH) aqueous solution to extract the organic expander. If the extract contains a plurality of organic expanders, then each organic expander is separated from the extract. For each separated material containing each organic expander, insoluble components are removed by filtration, and the obtained solution is desalted, then concentrated, and dried. The desalination is performed by using a desalination column, by causing the solution to pass through an ion-exchange membrane, or by placing the solution in a dialysis tube and immersing the solution in distilled water. The solution is dried to obtain a powder sample (hereinafter, referred to as a sample B) of the organic expander.

A type of the organic expander is specified using a combination of information obtained from an infrared spectroscopic spectrum measured using the sample B of the organic expander obtained as described above, an ultraviolet-visible absorption spectrum measured by an ultraviolet-visible absorption spectrometer after the sample B is diluted with distilled water or the like, or a nuclear magnetic resonance (NMR) spectrum of a solution obtained by dissolving the sample B in a predetermined solvent such as heavy water, and the like.

### (3) Quantitative analysis of carbonaceous material and barium sulfate

To 10 g of the ground sample A, 50 ml of nitric acid having a concentration of 20 mass% is added and heated for about 20 minutes to dissolve the lead component as lead ions. Next, the resulting mixture is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at 110°C ± 5°C. The obtained sample is a mixed sample of carbonaceous material and barium sulfate (hereinafter also referred to as sample C). A mass (Mₘ) of the sample C is measured by subtracting the mass of the membrane filter from the total mass of dried sample C and the membrane filter. Thereafter, the dried sample C is placed in a crucible together with a membrane filter and is burned and incinerated at 1,300°C or higher. The residue remaining is barium oxide. The mass of barium sulfate (M_{B}) is determined by converting the mass of barium oxide to the mass of barium sulfate. The mass of the carbonaceous material is calculated by subtracting the mass M_{B} from the mass Mₘ. A ratio (mass%) of each mass in the sample A is determined, and taken as the content Cc of the carbonaceous material and the content of lead sulfate in the negative electrode material.

### (4) BET specific surface area Sc of carbonaceous material

### (4-1) Separation of carbonaceous material

A predetermined amount of ground sample A is taken, and the mass thereof is measured. To sample A, 30 mL of a nitric acid aqueous solution at a concentration of 60 mass% is added per 5 g of sample A, and the mixture is heated at 70°C ± 5°C. To the resulting mixture, 10 g of disodium ethylenediaminetetraacetate, 30 mL of ammonia water having a concentration of 28 mass%, and 100 mL of water are added per 5 g of sample A, and heating is continued to dissolve a soluble component. Sample A is pretreated in this manner. The dispersion liquid obtained by the pretreatment is filtered with a membrane filter (opening: 0.1 pm) to collect a solid. The collected sample is passed through a sieve with an opening of 500 pm to remove components having a large size (reinforcing material), and components having passed through the sieve are collected as the carbonaceous materials.

### (4-2) Measurement of BET specific surface area Sc

The BET specific surface area Sc of the carbonaceous material collected in (4-1) above is determined by the gas adsorption method using a BET equation. More specifically, the carbonaceous material is pretreated by heating at a temperature of 150°C ± 5°C for 1 hour in a nitrogen flow. Using the pretreated carbonaceous material, the BET specific surface area is determined by the following apparatus under the following conditions, and is defined as the BET specific surface area Sc of the carbonaceous material.

Measuring apparatus: TriStar 3000 manufactured by Micromeritics Instrument Corporation.
Adsorption gas: nitrogen gas having a purity of 99.99% or more
Adsorption temperature: liquid nitrogen boiling point temperature (77 K)
Method for calculating BET specific surface area: in accordance with 7.2 of JIS Z 8830:2013

### (Others)

The lead-acid battery can be manufactured by a manufacturing method including at least the step of obtaining the negative electrode plate.

The negative electrode plate is obtained by a production method including a step of preparing a negative electrode paste containing a lead powder, a carbonaceous material, water, and sulfuric acid, a step of producing a non-formed negative electrode plate using the negative electrode paste, and a step of forming the non-formed negative electrode plate.

The negative electrode paste may contain an organic expander and various additives as necessary. The negative electrode paste is prepared by mixing raw materials. The organic expander is preferably added to the negative electrode paste such that the added amount Ce (mass%) of the organic expander in the negative electrode material satisfies the relationship of the above Formula (1) (preferably, the above Formula (2)). The organic expander may be added to the negative electrode paste such that the added amount Ce of the organic expander satisfies the relationship of the above Formula (3).

The non-formed negative electrode plate is obtained by applying or filling the negative electrode paste onto or into the negative current collector. The step of producing a non-formed negative electrode plate may include a step of further curing and drying an applied product or a filled product obtained by applying or filling the negative electrode paste onto or into the negative current collector. It is preferable to cure the applied product or the filled product at a temperature higher than room temperature and a high humidity.

The formation can be performed by charging the element with electricity in a state where the element including the non-formed negative electrode plate is immersed in the electrolyte solution containing sulfuric acid in the container of the lead-acid battery. However, the formation may be performed before the lead-acid battery or the element is assembled. The formation produces spongy lead.

### (Positive electrode plate)

The positive electrode plate usually includes a positive current collector and a positive electrode material. The positive electrode material is held by the positive current collector. The positive electrode plate of a lead-acid battery can be classified into a paste-type, a clad-type, and the like. A paste-type positive electrode plate is suitably used.

The positive current collector may be prepared by casting lead (Pb) or a lead alloy, or may be prepared by processing a lead sheet or a lead alloy sheet. Examples of the processing method include expanding processing or punching processing. It is preferable to use a grid-shaped current collector as the positive current collector because the positive electrode material is easy to support.

As a lead alloy used for the positive current collector, a Pb-Sb-based alloy and a Pb-Ca-Sn-based alloy are preferable in terms of corrosion resistance and mechanical strength. The positive current collector may include a surface layer. The surface layer and the inner layer of the positive current collector may have different compositions. The surface layer may be provided in a part of the positive current collector. The surface layer may be provided only on the grid part, only on the lug part, or only on the frame rib part of the positive current collector.

The positive electrode material contained in the positive electrode plate contains a positive active material (lead dioxide or lead sulfate) that exhibits a capacity through a redox reaction. The positive electrode material may contain another additive if necessary.

As described above, the ratio of the first pores in the positive electrode material is preferably 9% by volume or more, and may be 15% by volume or more. When the ratio of the first pores is in such a range, it is possible to suppress a decrease in low-temperature HR discharge performance after storing the VRLA for a long period of time, and to secure excellent room-temperature HR discharge performance and room-temperature HR cycle performance. From the viewpoint of securing a high capacity and suppressing deterioration of the positive electrode plate, the ratio of the first pores may be, for example, 25% by volume or less, 20% by volume or less, or 14% by volume or less.

The ratio of the first pores in the positive electrode material may be 9% by volume or more (or 15% by volume or more) and 25% by volume or less, 9% by volume or more (or 15% by volume or more) and 20% by volume or less, or 9% by volume or more and 14% by volume or less.

A non-formed paste-type positive electrode plate is obtained by filling a positive current collector with a positive electrode paste, and curing and drying the paste. The positive electrode paste is prepared by mixing lead powder, an additive, water, and sulfuric acid. For example, the ratio of the first pores can be adjusted by adjusting the amount of water and the amount of sulfuric acid in preparing the positive electrode paste.

The positive electrode plate is obtained by forming the non-formed positive electrode plate. The formation can be performed by charging the element in the state where the element including the non-formed positive electrode plate immersed in the electrolyte solution containing sulfuric acid in the container of the lead-acid battery. However, the formation may be performed before the lead-acid battery or the element is assembled.

The NAM/PAM ratio is, for example, 1.25 or less, and may be 1.21 or less. As described above, the NAM/PAM ratio is preferably less than 1.21. From the viewpoint of securing higher room-temperature HR discharge performance, the NAM/PAM ratio is preferably 1.05 or less, and more preferably 1.04 or less. The lower limit of the NAM/PAM ratio is, for example, 0.4 or more. The NAM/PAM ratio can be adjusted, for example, by adjusting the content of lead in the plate, the electrode material density, the thickness of the plate, the number of plates, and the like.

### (Analysis of positive electrode material)

The positive electrode material is analyzed using the positive electrode material collected from the positive electrode plate taken out of the lead-acid battery in the fully charged state.

The positive electrode material is collected from the positive electrode plate in the following procedure. First, the lead-acid battery in the fully charged state is disassembled, and the obtained positive electrode plate is washed with water to remove a sulfuric acid component from the positive electrode plate. The washing with water is performed until it is confirmed that color of a pH test paper does not change by pressing the pH test paper against a surface of the positive electrode plate washed with water. However, the washing with water is performed within two hours. The positive electrode plate washed with water is dried at 60°C ± 5°C for about six hours. After drying, when the sticking member is included in the positive electrode plate, the sticking member is removed from the positive electrode plate by peeling. In this way, a positive electrode plate for analysis is obtained.

### (1) Mass of positive electrode material

The mass of the positive electrode material is determined in accordance with the description of the quantification of the negative electrode material except for using the positive electrode plate for analysis. The PAM/NAM ratio is determined from the obtained mass of the positive electrode material and the mass of the negative electrode material.

### (2) Ratio of first pores

The positive electrode material (hereinafter, referred to as a sample D) for analysis is obtained by collecting the positive electrode material from the vicinity of the center in the vertical and horizontal directions when the positive electrode plate for analysis described above is viewed from the front.

The sample D is used to measure the total pore volume and pore distribution by means of a mercury porosimeter (automatic porosimeter, Autopore IV 9505 manufactured by Shimadzu Corporation). In this pore distribution, a volume-based ratio (% by volume) of the first pores to the total pore volume is determined. This ratio is the ratio (% by volume) of the first pores in the positive electrode material. The total pore volume and the pore distribution are measured under the following conditions.
Contact angle: 130°
Surface tension: 484 dyn/cm
Pore diameter: 0.0055 pm or more and 170 pm or less

### (Separator)

The VRLA usually includes a separator interposed between the negative electrode plate and the positive electrode plate. The separator is composed of a nonwoven fabric. The nonwoven fabric is a mat in which glass fibers are intertwined without being woven. The thickness of separators interposed between the negative electrode plate and the positive electrode plate may be selected in accordance with the inter-electrode distance. The number of separators may be selected according to the number between the poles.

The nonwoven fabric is mainly composed of fibers. As the fibers, there can be used glass fibers, polymer fibers (polyolefin fiber, acrylic fiber, polyester fiber (polyethylene terephthalate fiber, or the like), and the like), pulp fibers, and the like. Among them, glass fibers are preferable. The nonwoven fabric may contain components in addition to the fibers, such as acid-resistant inorganic powder, and a polymer as a binder.

An average fiber diameter of the glass fiber is preferably, for example, 0.1 pm or more and 25 pm or less.

The average fiber diameter can be determined from enlarged photographs of arbitrarily selected ten or more fibers. The glass fiber may be used by mixing fibers having a single fiber diameter and fibers having a plurality of fiber diameters (for example, 1 pm glass fibers and 10 pm glass fibers).

The nonwoven fabric may contain a fiber material insoluble in the electrolyte solution in addition to the glass fiber. As the fiber material other than the glass fiber, there can be used glass fibers, polymer fibers (e.g., polyolefin fiber, acrylic fiber, polyester fiber such as polyethylene terephthalate fiber), pulp fibers, and the like. For example, 60 mass% or more of the nonwoven fabric is preferably composed of the fiber material. The ratio of the glass fiber to the fiber material constituting the nonwoven fabric is preferably 60 mass% or more. The nonwoven fabric may contain an inorganic powder (for example, silica powder, glass powder, diatomaceous earth) and the like.

The separator may be composed of only a nonwoven fabric. The separator may be, when required, a laminate of a nonwoven fabric and a microporous film, a laminate of a nonwoven fabric and a material different from or the same as the nonwoven fabric, or a product obtained by engaging recesses and projections to each other with a nonwoven fabric and a material different from or the same as the nonwoven fabric.

The microporous film is a porous sheet mainly composed of components other than fiber components. The microporous film is obtained by, for example, extrusion molding a composition containing, for example, a pore-forming additive (at least one of a polymer powder and oil) into a sheet shape and then removing the pore-forming additive to form pores. The microporous film preferably contains a material having acid resistance. A microporous membrane containing a polymer component as a main component is preferable. As the polymer component, a polyolefin (a polyethylene, a polypropylene, etc.) is preferable.

### (Electrolyte solution)

The electrolyte solution is an aqueous solution containing sulfuric acid. The electrolyte solution may be gelled as necessary and used for the lead-acid battery. The electrolyte solution may contain at least one selected from the group consisting of a cation (for example, a metal cation) and an anion (for example, an anion other than a sulfate anion (a phosphate ion, etc.)) as necessary. Examples of the metal cation include at least one selected from the group consisting of a sodium ion, a lithium ion, a magnesium ion, and an aluminum ion.

The specific gravity of the electrolyte solution in the lead-acid battery in a fully charged state at 20°C is, for example, 1.20 or more and may be 1.25 or more. The specific gravity of the electrolyte solution at 20°C is, for example, 1.35 or less and preferably 1.32 or less.

The specific gravity of the electrolyte solution in the lead-acid battery in the fully charged state at 20°C may be 1.20 or more and 1.35 or less, 1.20 or more and 1.32 or less, 1.25 or more and 1.35 or less, or 1.25 or more and 1.32 or less.

The lead-acid battery can be obtained by a production method including a step of assembling a lead-acid battery by housing a positive electrode plate, a negative electrode plate, and an electrolyte solution in a container. In the assembly process of the lead-acid battery, the separator is usually disposed so as to be interposed between the positive electrode plate and the negative electrode plate. When at least one of the positive electrode plate and the negative electrode plate housed in the container is non-formed, the assembly process of the lead-acid battery includes a step of forming at least one of the positive electrode plate and the negative electrode plate after the step of housing the positive electrode plate, the negative electrode plate, and the electrolyte solution in the container. The positive electrode plate, the negative electrode plate, the electrolyte solution, and the separator are each prepared before being housed in the container.

### (Evaluation of lead-acid battery)

### (Accumulation amount of lead sulfate)

The lead-acid battery after full charge is subjected to a PSOC cycle test in an air tank at 10°C ± 2°C. More specifically, the following (a) to (i) are repeated for 10,000 cycles as one cycle of charge and discharge.
(a) IS discharge (1): discharge is performed for 20 seconds at a current value (A) which is twice a numerical value described as a rated 10-hour rate capacity (Ah).
(b) Discharge corresponding to the time of restart: discharge is performed for 1 second at the current value (A) which is six times the numerical value described as the rated 10-hour rate capacity (Ah).
(c) Discharge corresponding to the time of motor acceleration: discharge is performed for 0.5 seconds at the current value (A) which is fifteen times the numerical value described as the rated 10-hour rate capacity (Ah).
(d) Constant voltage charge (1): charge is performed for 50 seconds at a constant voltage of 2.42 V ± 0.03 V/cell (about 14.52 V/6 cell) with the current value (A) of the numerical value described as the rated 10-hour rate capacity (Ah) as a maximum current.
(e) IS discharge (2): discharge is performed for 20 seconds at the current value (A) which is twice the numerical value described as the rated 10-hour rate capacity (Ah).
(f) Discharge corresponding to the time of restart: discharge is performed for 1 second at the current value (A) which is six times the numerical value described as the rated 10-hour rate capacity (Ah).
(g) Discharge corresponding to the time of motor acceleration: discharge is performed for 0.3 seconds at the current value (A) which is twenty times the numerical value described as the rated 10-hour rate capacity (Ah).
(h) IS discharge (3): discharge is performed for 3 seconds at the current value (A) which is eight times the numerical value described as the rated 10-hour rate capacity (Ah).
(i) Constant voltage charge (2): charge is performed for 100 seconds at a constant voltage of 2.42 V ± 0.03 V/cell (about 14.52 V/6 cell) with the current value (A) of the numerical value described as the rated 10-hour rate capacity (Ah) as a maximum current.

This cycle test is performed in a state where the SOC of 90% or more, which is the threshold, is maintained, and can be said to be a test simulating IS control with the SOC of 90% or more in compact mobility or the like.

The negative electrode plate is taken out from the lead-acid battery after the cycle, and the negative electrode plate is washed with water and dried under a pressure lower than atmospheric pressure. The washing with water is performed until it is confirmed that color of a pH test paper does not change by pressing the pH test paper against the surface of the negative electrode plate washed with water. However, the washing with water is performed within two hours. The negative electrode material is collected from the entire negative electrode plate and ground. Next, the content of sulfur element in the ground negative electrode material (ground sample) is measured using a sulfur element analyzer (S-200 type manufactured by LECO Corporation). Then, the content of sulfur element in lead sulfate accumulated in the negative electrode material is determined according to the following formula.

### Content of sulfur element in lead sulfate

= (Content of sulfur element obtained by sulfur element analyzer) - (mass (g) of ground sample × added amount (g/g) of organic expander × content (g/g) of sulfur element in organic expander)

Next, the content of the sulfur element in lead sulfate is converted into the amount of lead sulfate, and a concentration (mass%) of lead sulfate per unit mass of the ground sample is determined and taken as the accumulation amount of lead sulfate.

### (Low-temperature HR discharge performance)

The lead-acid battery after full charge is discharged at a discharge current of 150 A at -15°C ± 2°C until the terminal voltage reaches 1.0 V/cell, and the discharge time (initial low-temperature HR discharge duration time) (s) at this time is obtained. The longer the discharge duration time, the better the low-temperature HR discharge performance.

After measuring the initial low-temperature HR discharge duration time, the lead-acid battery is left at 20°C ± 2°C. The lead-acid battery at the time points of three months and six months from the start of leaving is charged at a constant voltage of 14.5 V/cell at 20°C ± 2°C for 16 hours, and discharged at a discharge current of 40 A at 0°C ± 2°C until the terminal voltage reaches 1.0 V/cell, and the discharge time (low-temperature HR discharge duration time) (s) at this time is determined. When the initial low-temperature HR discharge duration time (s) is 100%, a ratio (%) of the low-temperature HR discharge duration time (s) after leaving for three months and after leaving for six months is obtained, and the ratio after leaving for six months is subtracted from the ratio after leaving for three months to obtain a reduction rate d (%) for three months. A value obtained by multiplying this decrease rate d by 6 is subtracted from the ratio after leaving for three months, thereby estimating the ratio (%) of the low-temperature HR discharge duration time of the lead-acid battery after being left for two years, and evaluating the low-temperature HR discharge performance using this ratio as the retention rate of the low-temperature HR discharge performance.

### (Room-temperature HR discharge performance)

The lead-acid battery after full charge is discharged at a discharge current of 40 A at 25°C ± 2°C until the terminal voltage reaches 1.0 V/cell, and the discharge time (initial room-temperature HR discharge duration time) (s) and discharge capacity (initial discharge capacity) at this time are obtained. The longer the discharge duration time, the better the room-temperature HR discharge performance.

For the lead-acid battery in which the initial room-temperature HR discharge duration time and the discharge capacity have been determined, the following charge and discharge cycles are repeated until the discharge capacity reaches 50% of the initial discharge capacity. The number of cycles at this time is determined, and the room-temperature HR cycle performance are evaluated based on this number of cycles.

### (Charge acceptability)

The lead-acid battery after full charge is discharged to a depth of discharge (DOD) of 10% under the following conditions, rested for one hour, and then charged under the following conditions. The charge acceptability is compared with a current value at 100 seconds after the start of charge. A state where the battery is discharged for 1 hour at a current value (A) which is 0.1 times the numerical value described as the rated 10-hour rate capacity (Ah) is defined as DOD 10%.
Discharge: discharge is performed for 1 hour at the current value (A) which is 0.1 times the numerical value described as the rated 10-hour rate capacity (Ah).
Charge (charge acceptability): constant voltage (2.35 V ± 0.02 V/cell, maximum current: 10 A)
Temperature: 25°C ± 2°C

### (Decrease in electrolyte solution)

The lead-acid battery after full charge is charged at a constant voltage (2.36 V ± 0.03 V/cell, maximum current 10 A) at 50°C ± 2°C for 100 days. During this time, the amount of the electrolyte solution is monitored, and a proportion (percentage) of a reduced mass of the electrolyte solution to an initial mass of the electrolyte solution is determined as the reduction amount of the electrolyte solution.

The VRLA may constitute a power storage system in combination with a vehicle that receives power supply from the VRLA, and a state-of-charge controller that controls the SOC of the VRLA. The present invention also includes such a power storage system.

As described above, the VRLA is preferably used for a vehicle which is subjected to IS control when the SOC is equal to or more than the threshold of 90% or more, and not subjected to IS control when the SOC is less than the threshold. In this case, when the SOC of the VRLA is less than the threshold, the state-of-charge controller charges the VRLA at a constant voltage until the SOC reaches a predetermined SOC. Accordingly, even when the vehicle does not include the BMS, the SOC of the VRLA can be easily increased.

The state-of-charge controller may start charging the VRLA when the SOC reaches a predetermined SOC equal to or less than the threshold, or may start charging VRLA when the SOC reaches a predetermined SOC more than the threshold.

The VRLA is charged at a constant voltage while the engine is driven. At this time, an alternator is operated to generate power, and the VRLA is charged at a constant voltage. At the time of constant voltage charge, a charge voltage is set in order to avoid overcharge of the VRLA. For example, when the SOC of the VRLA reaches the threshold from a value more than the threshold, the engine of the vehicle is not stopped, and constant voltage charge from the alternator is continued. Thus, the SOC of the VRLA is controlled so as to maintain the SOC equal to or more than the threshold.

In the VRLA described above, charge at a constant voltage may be performed at 2.30 V/cell or more (preferably 2.33 V/cell or more) and 2.45 V/cell or less. For example, in the case of a lead-acid battery including six cells connected in series, it is preferable to charge the lead-acid battery at a constant voltage of 13.80 V or more (preferably 14.0 V or more) and 14.7 V or less.

The voltage for constant voltage charge is obtained by measuring, with a voltmeter (Memory HiLogger LR 8400 manufactured by HIOKI E.E. CORPORATION), a battery voltage when the VRLA is charged at a constant voltage for a vehicle that receives power supply from the VRLA, and converting the battery voltage per unit cell.

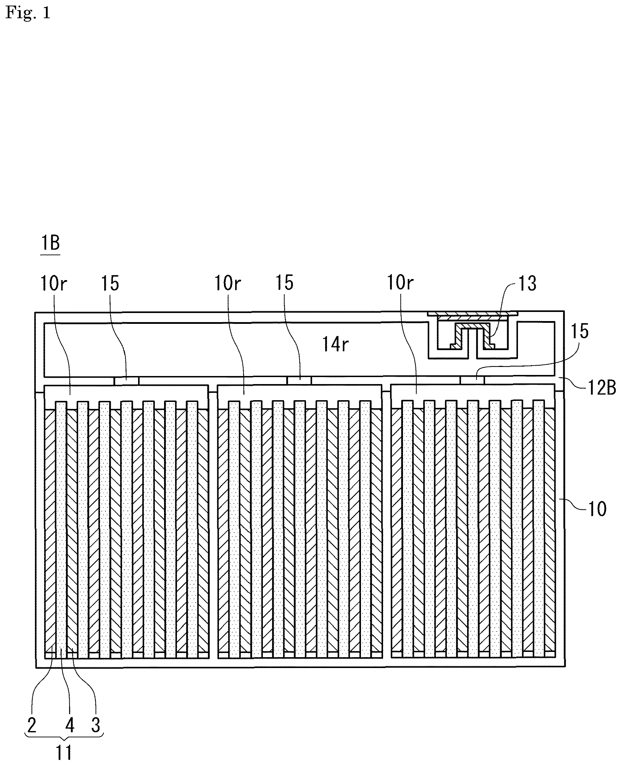

Fig. 1 is a cross-sectional view schematically illustrating a structure of a valve regulated lead-acid battery according to an embodiment of the present invention.

In Fig. 1, a lead-acid battery 1B includes a container 10 that accommodates an element 11 and an electrolyte solution (not illustrated). An upper opening of the container 10 is sealed by a lid 12B. The element 11 is configured by stacking a plurality of negative electrode plates 2 and a plurality of positive electrode plates 3 with a separator 4 interposed therebetween.

An upper portion of each of the plurality of negative electrode plates 2 is provided with a current collection lug part (not illustrated) projecting upward. An upper portion of each of the plurality of positive electrode plates 3 is also provided with a current collection lug part (not illustrated) projecting upward. The lug parts of the negative electrode plates 2 are connected and integrated with each other by a negative electrode strap (not illustrated). Similarly, the lug parts of the positive electrode plates 3 are also connected and integrated with each other by a positive electrode strap (not illustrated). The negative electrode strap is connected to a negative pole (not illustrated) serving as an external terminal, and the positive electrode strap is connected to a positive pole (not illustrated) serving as an external terminal.

The container 10 is divided into a plurality of (three in the illustrated example) cell chambers 10r independent from each other, and one element 11 is housed in each of the cell chambers 10r. The lid 12B has a collective exhaust chamber 14r communicating with each cell chamber via a vent hole 15, and the collective exhaust chamber 14r includes a smaller number (one in the illustrated example) of exhaust valves 13 than the number of cell chambers. When an internal pressure of the collective exhaust chamber 14r exceeds a predetermined upper limit value, the exhaust valve 13 is opened to release gas from the collective exhaust chamber 14r to the outside. When the internal pressure of the collective exhaust chamber 14r is equal to or less than the upper limit value, oxygen generated in the positive electrode plate 3 is reduced in the negative electrode plate 2 in arbitrary cell chamber 10r to generate water. Fig. 1 illustrates a case where a lid including one exhaust valve 13 in the collective exhaust chamber 14r is used; however, the present invention is not limited to this case, and a lid including an independent exhaust valve for each cell chamber may be used.

Fig. 2 is a block diagram schematically illustrating the energy storage system having the above configuration. A power storage system 20 includes a valve regulated lead-acid battery A, a vehicle 30 that receives power supply from the lead-acid battery A, and a state-of-charge controller 40 that controls the SOC of the lead-acid battery A. The state-of-charge controller 40 includes a charge control unit 41 that controls charge of the lead-acid battery A. The vehicle 30 is an idling stop vehicle (IS vehicle) including a IS system (ISS) by an idling stop (IS) controller 50. When the SOC of the lead-acid battery A is controlled (IS control) to maintain a threshold of 90% or more, the state-of-charge controller 40 charges the lead-acid battery A at a constant voltage of 2.30 V/cell or more and 2.45 V/cell or less when the SOC of the lead-acid battery A reaches the threshold during the IS period.

A lead-acid battery and a manufacturing method according to one and another aspects of the present invention, and a power storage system according to another aspect are described below.

(1) A valve regulated lead-acid battery comprising:
   at least one cell including a positive electrode plate, a negative electrode plate, and an electrolyte solution,
   wherein the positive electrode plate includes a positive electrode material,
   the negative electrode plate includes a negative electrode material and a negative current collector,
   the negative electrode material contains a carbonaceous material,
   a specific surface area of the carbonaceous material determined by a BET method: Sc satisfies Sc ≥ 650 m²/g,
   a content of the carbonaceous material in the negative electrode material: Cc satisfies Cc ≥ 0.5 mass%, and
   the valve regulated lead-acid battery is used for compact mobility.
(2) A valve regulated lead-acid battery comprising:
   at least one cell including a positive electrode plate, a negative electrode plate, and an electrolyte solution,
   wherein the positive electrode plate includes a positive electrode material,
   the negative electrode plate includes a negative electrode material and a negative current collector,
   the negative electrode material contains a carbonaceous material,
   a specific surface area of the carbonaceous material determined by a BET method: Sc satisfies Sc ≥ 650 m²/g,
   a content of the carbonaceous material in the negative electrode material: Cc satisfies Cc ≥ 0.5 mass%,
   the valve regulated lead-acid battery is used for a vehicle, and
   the vehicle is subjected to idling stop control when a state of charge: SOC of the valve regulated lead-acid battery is equal to or more than a threshold of 90% or more, and is not subjected to the idling stop control when the SOC of the valve regulated lead-acid battery is less than the threshold.
(3) In (1) or (2) above, an organic expander may be further added to the negative electrode material.
(4) In (3) above, the specific surface area Sc satisfies 650 m²/g ≤ Sc ≤ 1,000 m²/g, and an added amount Ce (mass%) of the organic expander in the negative electrode material may satisfy Ce > 0.368 Cc + 0.054.
(5) In (4) above, the added amount Ce may satisfy 0.372 Cc + 0.092 ≤ Ce ≤ 0.373 Cc + 0.249.
(6) A method of manufacturing the valve regulated lead-acid battery according to (1) or (2) above, comprising:
   preparing a negative electrode paste containing a lead powder, the carbonaceous material, water, and sulfuric acid;
   producing a non-formed negative electrode plate by applying or filling the negative electrode paste onto or into the negative current collector; and
   forming the non-formed negative electrode plate to obtain the negative electrode plate including the negative electrode material and the negative current collector.
(7) In (6) above, the negative electrode paste further contains an organic expander,
   the specific surface area Sc satisfies 650 m²/g ≤ Sc ≤ 1,000 m²/g, and an added amount Ce (mass%) of the organic expander in the negative electrode material may satisfy Ce > 0.368 Cc + 0.054.
(8) In (7) above, the added amount Ce may satisfy 0.372 Cc + 0.092 ≤ Ce ≤ 0.373 Cc + 0.249.
(9) A power storage system comprising:
   a valve regulated lead-acid battery;
   a vehicle that receives power supply from the valve regulated lead-acid battery; and
   a state-of-charge controller that controls a state of charge: SOC of the valve regulated lead-acid battery,
   wherein the valve regulated lead-acid battery includes at least one cell including a positive electrode plate, a negative electrode plate, and an electrolyte solution,
   the positive electrode plate includes a positive electrode material,
   the negative electrode plate includes a negative electrode material and a negative current collector,
   the negative electrode material contains a carbonaceous material,
   a specific surface area of the carbonaceous material determined by a BET method: Sc satisfies Sc ≥ 650 m²/g,
   a content of the carbonaceous material in the negative electrode material: Cc satisfies Cc ≥ 0.5 mass%, and
   the vehicle is subjected to idling stop control when the state of charge: SOC of the valve regulated lead-acid battery is equal to or more than a threshold of 90% or more, and is not subjected to the idling stop control when the SOC of the valve regulated lead-acid battery is less than the threshold.
(10) In (9) above, the state-of-charge controller may charge the valve regulated lead-acid battery at a constant voltage when the SOC of the valve regulated lead-acid battery is less than the threshold.
(11) In (10) above, charge at the constant voltage may be performed at 2.30 V/cell or more (preferably 2.33 V/cell or more) and 2.45 V/cell or less.
(12) In any one of (1) to (11) above, the specific surface area Sc may be 750 m²/g or more, or 800 m²/g or more.
(13) In any one of (1) to (3), (6), and (9) to (12) above, the specific surface area Sc may be 1,000 m²/g or less.
(14) In any one of (1) to (13) above, the content Cc of the carbonaceous material may be 0.75 mass% or more.
(15) In any one of (1) to (14) above, the content Cc of the carbonaceous material may be 3 mass% or less, or 2 mass% or less.
(16) In any one of (1) to (15) above, a ratio of a mass of the negative electrode material to a mass of the positive electrode material: NAM/PAM ratio may be 1.25 or less or 1.21 or less.
(17) In any one of (1) to (16) above, the ratio of the mass of the negative electrode material to the mass of the positive electrode material: NAM/PAM ratio may be 0.4 or more.
(18) In any one of (1) to (17) above, the ratio of the mass of the negative electrode material to the mass of the positive electrode material: NAM/PAM ratio may satisfy the NAM/PAM ratio < 1.21.
(19) In (18) above, the positive electrode material includes a first pore having a pore diameter of 1 pm or more and 10 pm or less, and a ratio of the first pore in the positive electrode material may be 9% by volume or more.
(20) In (19) above, the ratio of the first pores may be 25% by volume or less, 20% by volume or less, or 14% by volume or less.
(21) In (19) above, the ratio of the first pores may be 15% by volume or more.
(22) In (21) above, the ratio of the first pores may be 25% by volume or less or 20% by volume or less.
(23) In any one of (1) to (22) above, the negative electrode material may contain barium sulfate.
(24) In (23) above, a content of the barium sulfate in the negative electrode material may be 0.05 mass% or more or 0.10 mass% or more.
(25) In (23) or (24) above, the content of barium sulfate in the negative electrode material may be 3 mass% or less or 2 mass% or less.
(26) In any one of (1) to (25) above, a specific gravity of the electrolyte solution at 20°C in the lead-acid battery in a fully charged state may be 1.20 or more or 1.25 or more.
(27) In any one of (1) to (26) above, the specific gravity of the electrolyte solution at 20°C in the lead-acid battery in the fully charged state may be 1.35 or less or 1.32 or less.

### EXAMPLES

Hereinafter, the present invention is specifically described on the basis of examples and comparative examples, but the present invention is not limited to the following examples.

### «Valve regulated lead-acid batteries A1 and R1 to R3»

A valve regulated lead-acid battery is produced by the following procedure.

### (a) Preparation of negative electrode plate

A lead powder as a raw material, barium sulfate, a carbonaceous material, and an organic expander (sodium lignin sulfonate) are mixed with a suitable amount of a sulfuric acid aqueous solution to obtain a negative electrode paste. At this time, the carbonaceous material is mixed so that the content of the carbonaceous material determined by the procedure described above is the value shown in Table 1. As the carbonaceous material, carbon black is used such that the BET specific surface area Sc determined by the procedure described above has the value shown in Table 1. The added amount Ce of the organic expander is adjusted so that the content Cc of the carbonaceous material and the added amount Ce of the organic expander satisfy Formulas (1) and (2).

A mesh portion of an expanded grid made of a Pb-Ca-Sn alloy is filled with the negative electrode paste, which is then cured and dried to obtain a non-formed negative electrode plate.

### (b) Preparation of positive electrode plate

A lead powder as a raw material is mixed with a sulfuric acid aqueous solution to obtain a positive electrode paste. A mesh portion of an expanded grid made of a Pb-Ca-Sn alloy is filled with the positive electrode paste, which is then cured and dried to obtain a non-formed positive electrode plate.

### (c) Assembly of lead-acid battery

Four non-formed negative electrode plates and three non-formed positive electrode plates are used, a separator is interposed between the negative electrode plates and the positive electrode plates, and the negative electrode plates and the positive electrode plates are alternately stacked to prepare an element. As the separator, a nonwoven fabric of glass fiber is used.

The element is housed into a container made of polypropylene together with an electrolyte solution to assemble a lead-acid battery. The assembled battery is subjected to formation to complete VRLA (VRLA for compact mobility). The VRLA has a rated voltage of 12 V and a rated 10-hour rate capacity of 5 Ah. The specific gravity of the electrolyte solution after formation is 1.32. The negative electrode material after the formation contains barium sulfate of 0.5 mass%. The ratio of the first pores in the positive electrode material determined by the procedure described above is 0.9% by volume. The NAM/PAM ratio determined by the procedure described above is 1.21.

### «Flooded-type lead-acid batteries R4 to R7»

Similarly to the lead-acid battery A1, a non-formed negative electrode plate and a non-formed positive electrode plate are prepared. The non-formed negative electrode plate is housed in a bag-shaped separator composed of a polyethylene microporous film. Except for this, similarly to the lead-acid battery A1, an element is prepared, and a lead-acid battery is assembled. The assembled battery is subjected to formation to complete a flooded-type lead-acid battery (lead-acid battery for four-wheeled vehicle). The lead-acid battery has a rated voltage of 12 V and a rated 10-hour rate capacity of 5 Ah.

### [Accumulation amount of lead sulfate]

The valve regulated lead-acid batteries (VRLA) A1 and R1 to R3 are charged and discharged including the PSOC cycle by the procedure described above, and the accumulation amount of lead sulfate in the negative electrode plate is measured.

The flooded-type lead-acid batteries R4 to R7 after full charge are subjected to the PSOC cycle test at 10°C ± 2°C. More specifically, the following (a) to (f) are repeated for 10 cycles as one cycle. The lead-acid battery is disassembled to determine the accumulation amount of lead sulfate in the negative electrode plate. The accumulation amount is obtained similarly to the case of the VRLA described above. Charging and discharging during IS correspond to (b) and (c).
(a) Depth of discharge (DOD) regulation (DOD 50%): discharge is performed for 2.5 hours at the current value (A) which is four times a numerical value of a rated 20-hour rate capacity (Ah).
(b) Constant voltage charge: charge is performed for 40 minutes at a constant voltage of 2.35 V ± 0.02 V/cell with the current value (A) of the numerical value of a rated capacity (preferably the rated 20-hour rate capacity) (Ah) as the maximum current.
(c) Discharge (DOD 17.5%): discharge is performed for 30 minutes at the current value (A) which is seven times the numerical value of the rated 20-hour rate capacity (Ah).
(d) Full charge: charge is performed for 18 hours at a constant voltage of 2.67 V ± 0.03 V/cell with the current value (A), which is twice the numerical value of the rated 20-hour rate capacity (Ah), as the maximum current.
(e) 20-hour rate discharge: Discharge is performed at the current value (A) of the numerical value of the rated capacity (preferably the rated 20-hour rate capacity) (Ah) until a final voltage reaches 1.75 V/cell.
(f) Full charge: charge is performed for 24 hours at a constant voltage of 2.67 V ± 0.03 V/cell with the current value (A), which is twice the numerical value of the rated capacity (preferably the rated 20-hour rate capacity) (Ah), as the maximum current.

The results of the lead-acid batteries A1 and R1 to R7 are shown in Table 1. A1 is Example, and R1 to R7 are Comparative Examples.

**[Table 1]**

| Battery No. | Carbonaceous material | | Accumulation amount of lead sulfate (%) |
|---|---|---|---|
| | BET specific surface area Sc (m²/g) | Content Cc (mass%) | |
| A1 | 800 | 1.0 | 12.5 |
| R1 | 200 | 1.0 | 29.8 |
| R2 | 800 | 0.3 | 31.0 |
| R3 | 200 | 0.3 | 32.2 |
| R4 | 800 | 1.0 | 14.2 |
| R5 | 200 | 1.0 | 13.5 |
| R6 | 800 | 0.3 | 33.4 |
| R7 | 200 | 0.3 | 35.6 |

| | | | |
|---|---|---|---|
| A1, R1 to R3: VRLA R4 to R7: Flooded type | | | |

As shown in Table 1, in the flooded-type lead-acid battery for a four-wheeled vehicle, in both cases where the content Cc of the carbonaceous material is less than 0.5 mass% and where the content Cc is 0.5 mass% or more, there is almost no difference in the accumulation amount of lead sulfate depending on the BET specific surface area Sc of the carbonaceous material (comparison of R4 and R5, comparison of R6 and R7). In the flooded-type lead-acid battery for a four-wheeled vehicle, as the content Cc of the carbonaceous material increases, the accumulation amount of lead sulfate decreases regardless of the BET specific surface area Sc of the carbonaceous material (comparison of R4 and R5 with R6 and R7). Although these results are results in the flooded-type lead-acid battery, the same tendency is obtained also in the case of the VRLA for a four-wheeled vehicle.

On the other hand, in the VRLA for compact mobility, when the content Cc of the carbonaceous material is less than 0.5 mass%, there is almost no difference in the accumulation amount of lead sulfate depending on the BET specific surface area Sc of the carbonaceous material (comparison of R2 and R3). When the BET specific surface area Sc is less than 650 m²/g, the accumulation amount of lead sulfate hardly changes even if the content Cc of the carbonaceous material is increased (comparison of R3 and R1). However, when the carbonaceous material having a BET specific surface area Sc of 650 m²/g or more is used at the content Cc of 0.5 mass% or more, the accumulation amount of lead sulfate can be significantly reduced (comparison of A1 and R1, comparison of A1 and R2).

As described above, the lead-acid battery for a four-wheeled vehicle, which is subjected to IS control at a relatively low SOC, and the VRLA for compact mobility, which is subjected to IS control at a relatively high SOC, are greatly different from each other in the behavior indicated by the BET specific surface area Sc, which affects suppression of the accumulation of lead sulfate.

### «Valve regulated lead-acid batteries A2 to A7 and R8 to R9»

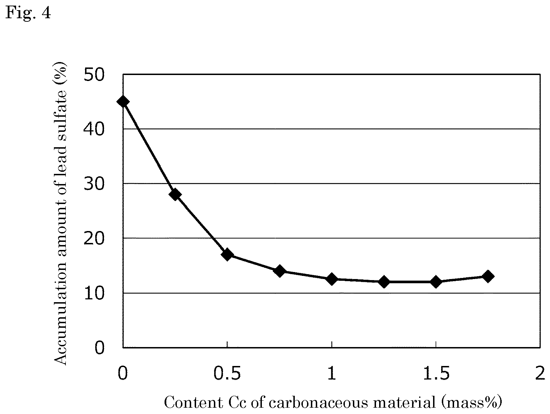

The carbonaceous material is mixed so that the content Cc of the carbonaceous material determined by the procedure described above is the value shown in Table 2. As the carbonaceous material, carbon black is used such that the BET specific surface area Sc determined by the procedure described above is 800 m²/g. The added amount Ce of the organic expander is adjusted so that the content Cc of the carbonaceous material and the added amount Ce of the organic expander satisfy Formulas (1) and (2). Except for this, a valve regulated lead-acid battery is produced similarly to the lead-acid battery A1, and the accumulation amount of lead sulfate is evaluated. Table 2 and Fig. 4 show the results. A2 to A7 are Examples, and R8 and R9 are Comparative Examples.

**[Table 2]**

| Battery No. | R8 | R9 | A2 | A3 | A4 | A5 | A6 | A7 |
|---|---|---|---|---|---|---|---|---|
| Content Cc of carbonaceous material (mass%) | 0 | 0.25 | 0.5 | 0.75 | 1 | 1.25 | 1.5 | 1.75 |
| Accumulation amount of lead sulfate (%) | 45 | 28 | 17 | 14 | 12.5 | 12 | 12 | 13 |

| | | | | | | | | |
|---|---|---|---|---|---|---|---|---|
| R8, R9: VRLA A2 to A7: VRLA | | | | | | | | |

As shown in Table 2 and Fig. 4, when the content Cc of the carbonaceous material in the negative electrode material is 0.5 mass% or more, a high effect of suppressing accumulation of lead sulfate is obtained. From these results and the results in Table 1, it is considered that the difference in the behavior of the BET specific surface area Sc as described above, which affects the effect of suppressing the accumulation of lead sulfate, between the lead-acid battery for a four-wheeled vehicle and the VRLAfor compact mobility can be obtained when the content Cc of the carbonaceous material is 0.5 mass% or more.

### «Valve regulated lead-acid batteries A8 to A11 and R10 to R12»

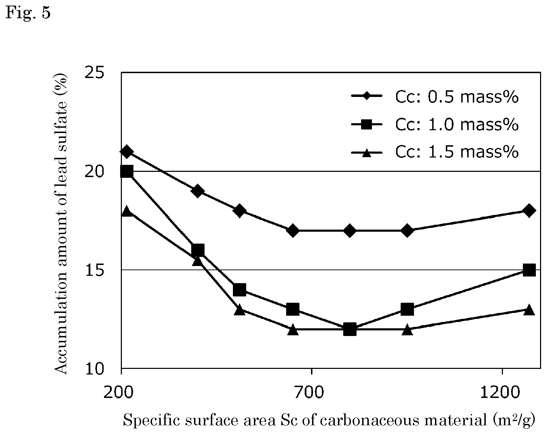

The carbonaceous material is mixed so that the content Cc of the carbonaceous material determined by the procedure described above is the value shown in Table 3. As the carbonaceous material, carbon black, or carbon black and graphite is/are used such that the BET specific surface area Sc determined by the procedure described above has the value shown in Table 3. The added amount Ce of the organic expander is adjusted so that the content Cc of the carbonaceous material and the added amount Ce of the organic expander satisfy Formulas (1) and (2). Except for these, a lead-acid battery is produced similarly to the lead-acid battery A1, and the accumulation amount of lead sulfate is evaluated. Table 3 and Fig. 5 show the results. A8 to A11 are Examples, and R10 to R12 are Comparative Examples.

**[Table 3]**

| Battery No. | BET specific surface area Sc of carbonaceous material (m²/g) | Content Cc of carbonaceous material (mass%) | | |
|---|---|---|---|---|
| | | 0.5 | 1.0 | 1.5 |
| | | Accumulation amount of lead sulfate (%) | | |
| R10 | 214 | 21 | 20 | 18 |
| R11 | 400 | 19 | 16 | 15.5 |
| R12 | 510 | 18 | 14 | 13 |
| A8 | 650 | 17 | 13 | 12 |
| A9 | 800 | 17 | 12 | 12 |
| A10 | 950 | 17 | 13 | 12 |
| A11 | 1270 | 18 | 15 | 13 |

| | | | | |
|---|---|---|---|---|
| R10 to R12: VRLA A8 to A11: VRLA | | | | |

As shown in Table 3 and Fig. 5, when the BET specific surface area Sc of the carbonaceous material is in the range of 650 m²/g or more and 1,000 m²/g or less, the accumulation amount of lead sulfate in the negative electrode plate is small and substantially constant. Thus, when the negative electrode material contains the carbonaceous material having a BET specific surface area Sc in such a range, it is easy to balance the battery performance such as the HR discharge performance, the charge acceptability, and suppression of the decrease in the electrolyte solution.

### «Valve regulated lead-acid batteries A21 to A56 and R21»

The carbonaceous material and the organic expander are mixed so that the content Cc of the carbonaceous material and the added amount Ce of the organic expander determined by the procedure described above are the values shown in Table 4. As the carbonaceous material, carbon black is used such that the BET specific surface area Sc determined by the procedure described above has the value shown in Table 4. Except for these, a lead-acid battery is produced similarly to the lead-acid battery A1. The lead-acid battery is evaluated for the low-temperature HR discharge performance (low-temperature HR discharge duration time (seconds)), the charge acceptability (100-second current (A)), and the decrease in the electrolyte solution by the procedure described above. The decrease in the electrolyte solution is evaluated according to the following criteria A to C.
A: The reduction amount of the electrolyte solution is less than 10 mass%.
B: The reduction amount of the electrolyte solution is 10 mass% or more and less than 15 mass%.
C: The reduction amount of the electrolyte solution is 15 mass% or more.

Table 4 and Fig. 3 show the results. Fig. 3 is a graph plotting the relationship between the added amount Ce of the organic expander and the content Cc of the carbonaceous material for the negative electrode material of each lead-acid battery shown in Table 4. A21 to A56 are Examples, and R21 is Comparative Example.

**[Table 4]**

| Battery No. | BET specific surface area Sc of carbonaceous material (m²/g) | Content Cc of carbonaceous material (mass%) | Added amount Ce of organic expander (mass%) | Low-temperature HR discharge performance (s) | Charge acceptability (A) | Decrease in electrolyte solution |
|---|---|---|---|---|---|---|
| R21 | 500 | 0.30 | 0.25 | 200 | 0.6 | A |
| A21 | 650 | 0.75 | 0.49 | 204 | 0.6 | A |
| A22 | | | 0.59 | 207 | 0.3 | A |
| A23 | | 1.25 | 0.45 | 132 | 0.8 | C |
| A24 | | | 0.61 | 202 | 0.6 | A |
| A25 | | | 0.76 | 209 | 0.2 | A |
| A26 | 800 | 1.00 | 0.00 | 120 | 2.1 | C |
| A27 | | | 0.25 | 127 | 1.2 | C |
| A28 | | | 0.32 | 140 | 0.9 | B |
| A29 | | | 0.42 | 190 | 0.8 | B |
| A30 | | | 0.46 | 195 | 0.7 | A |
| A31 | | | 0.62 | 212 | 0.5 | A |
| A32 | | | 0.69 | 218 | 0.3 | A |
| A33 | | 0.30 | 0.00 | 131 | 1.2 | C |
| A34 | | | 0.32 | 201 | 0.5 | A |
| A35 | | | 0.39 | 195 | 0.3 | A |
| A36 | | 0.50 | 0.25 | 129 | 0.9 | C |
| A37 | | | 0.28 | 198 | 0.7 | B |
| A38 | | | 0.34 | 207 | 0.6 | A |
| A39 | | | 0.46 | 219 | 0.5 | A |
| A40 | | 0.75 | 0.25 | 125 | 1.0 | A |
| A41 | | | 0.32 | 132 | 0.9 | B |
| A42 | | | 0.37 | 192 | 0.8 | A |
| A43 | | | 0.56 | 222 | 0.5 | A |
| A44 | | | 0.63 | 220 | 0.3 | A |
| A45 | | 1.25 | 0.50 | 125 | 0.8 | C |
| A46 | | | 0.56 | 195 | 0.7 | B |
| A47 | | | 0.72 | 217 | 0.5 | A |
| A48 | | 1.50 | 0.62 | 120 | 0.8 | C |
| A49 | | | 0.65 | 196 | 0.7 | B |
| A50 | | | 0.75 | 210 | 0.6 | A |
| A51 | | | 0.79 | 220 | 0.5 | A |
| A52 | 1000 | 1.00 | 0.50 | 208 | 0.6 | A |
| A53 | | | 0.60 | 216 | 0.6 | A |
| A54 | | | 0.65 | 219 | 0.3 | A |
| A55 | | 0.75 | 0.41 | 205 | 0.6 | A |
| A56 | | | 0.28 | 131 | 0.8 | C |

| | | | | | | |
|---|---|---|---|---|---|---|
| R21: VRLA A21 to A56: VRLA | | | | | | |

From Table 4 and Fig. 3, Ce > 0.368 Cc + 0.054 is preferable from the viewpoint of securing high low-temperature HR discharge performance (specifically, low-temperature HR discharge duration time of 180 seconds or more). From the viewpoint of suppressing the decrease in the electrolyte solution while securing higher low-temperature HR discharge performance, it is preferable to set 0.372 Cc + 0.092 ≤ Ce. From the viewpoint of securing higher charge acceptability, it is preferable to set Ce ≤ 0.373 Cc + 0.249.

### «Valve regulated lead-acid batteries A61 to A66 and R31 to R36»

The carbonaceous material and the organic expander are mixed so that the content Cc of the carbonaceous material determined by the procedure described above is the value shown in Table 5. As the carbonaceous material, carbon black is used such that the BET specific surface area Sc determined by the procedure described above has the value shown in Table 5. The added amount Ce of the organic expander is adjusted in a range of 0.372 Cc + 0.092 ≤ Ce ≤ 0.373 Cc + 0.249. By adjusting the concentration and amount of a sulfuric acid aqueous solution when preparing the negative electrode paste, the ratio of the first pores is adjusted to the value shown in Table 1. The NAM/PAM determined by the procedure described above is adjusted as shown in Table 5. Except for these, a lead-acid battery is produced similarly to the lead-acid battery A1, and the low-temperature HR discharge performance, the charge acceptability, the decrease in the electrolyte solution, the retention rate of the low-temperature HR discharge performance, the initial room-temperature HR discharge performance, and the room-temperature HR cycle performance are evaluated by the procedure described above. The decrease in the electrolyte solution is evaluated based on the above criteria. Table 5 shows the results. The room-temperature HR discharge performance and the room-temperature HR cycle performance are indicated by values obtained by setting the result of the lead-acid battery R31 to 100%. A61 to A66 are Examples, and R31 to R36 are Comparative Examples.

**[Table 5]**

| Battery No. | BET specific surface area Sc of carbonaceous material (m²/g) | Content Cc of carbonaceous material (mass%) | NAP/PAM ratio | Ratio of first pore (% by volume) | Low-temperature HR discharge performance (s) | Charge acceptability (A) | Decrease in electrolyte solution | Retention rate of low-temperature HR discharge performance (%) | Room-temperature HR discharge performance (initial stage) (%) | Room-temperature HR cycle performance (%) |
|---|---|---|---|---|---|---|---|---|---|---|
| A66 | 800 | 1.00 | 1.21 | 9 | 246 | 0.7 | A | 121 | 85 | <90 |
| A61 | | | 1.05 | 8 | 205 | 0.6 | A | 99 | 100 | 94 |
| A62 | | | 1.04 | 9 | 210 | 0.6 | A | 99 | 105 | 136 |
| A63 | | | 0.87 | 20 | 203 | 0.6 | A | 83 | 121 | 126 |
| A64 | | | 0.65 | 20 | 220 | 0.5 | A | 95 | 132 | 155 |
| A65 | | | 0.43 | 20 | 200 | 0.5 | A | 99 | 118 | 166 |
| R36 | 800 | 0.30 | 1.21 | 9 | 230 | 0.7 | A | 99 | 83 | <90 |
| R31 | | | 1.05 | 8 | 197 | 0.6 | A | 82 | 100 | 100 |
| R32 | | | 1.04 | 9 | 200 | 0.6 | A | 82 | 105 | 125 |
| R33 | | | 0.87 | 20 | 203 | 0.6 | A | ≤ 70 | 121 | 126 |
| R34 | | | 0.65 | 20 | 220 | 0.5 | A | ≤ 70 | 132 | <90 |
| R35 | | | 0.43 | 20 | 200 | 0.5 | A | ≤ 70 | 118 | <90 |

| | | | | | | | | | | |
|---|---|---|---|---|---|---|---|---|---|---|
| A61 to A66: VRLA R31 to R36: VRLA | | | | | | | | | | |

As shown in Table 5, when the negative electrode material contains the carbonaceous material having a BET specific surface area of 650 m²/g or more at the content Cc of 0.5 mass% or more, and the NAM/PAM ratio ≤ 1.21, a high retention rate of the low-temperature HR discharge performance can be secured. That is, high low-temperature HR discharge performance can be maintained even for long-term use. Since high low-temperature HR discharge performance can be obtained even if the NAM/PAM ratio is reduced (for example, NAM/PAM ratio < 1.21), the volume ratio of the positive electrode material can be relatively increased, and the room-temperature HR discharge performance can be improved. As a utilization factor of the positive active material contained in the positive electrode material decreases, the room-temperature HR cycle performance can be improved. On the other hand, when the content Cc of the carbonaceous material is less than 0.5 mass%, the retention rate of the low-temperature HR discharge performance decreases as the NAM/PAM ratio decreases.

When the negative electrode material contains the carbonaceous material having a BET specific surface area of 650 m²/g or more at the content Cc of 0.5 mass% or more, the room-temperature HR cycle performance are deteriorated when the ratio of the first pores in the positive electrode material is 8% by volume as compared with the case where the content Cc of the carbonaceous material is less than 0.5 mass%. However, when the ratio of the first pores is 9% by volume or more, higher room-temperature HR cycle performance can be secured when the content Cc of the carbonaceous material is 0.5 mass% or more.

While the present invention has been described with respect to presently preferred embodiments, such disclosure should not be construed in a limiting manner. Various modifications and modifications will undoubtedly become apparent to those skilled in the art to which the present invention belongs upon reading the above disclosure. Accordingly, the appended claims should be construed to encompass all variations and modifications without departing from the true spirit and scope of the present invention.

### INDUSTRIAL APPLICABILITY

The VRLA is suitable for compact mobility or IS vehicle applications, and the like. Note that these applications are merely illustrative and not limited to these applications.

### DESCRIPTION OF REFERENCE SIGNS

1B: valve regulated lead-acid battery
2: negative electrode plate
3: positive electrode plate
4: separator
11: element
10: container
10r: cell chamber
12B: lid
13: exhaust valve
14r: collective exhaust chamber
20: power storage system
30: vehicle
40: state-of-charge controller
41: charge control unit
50: idling stop (IS) controller
A: valve regulated lead-acid battery (VRLA)

## Claims

1. A valve regulated lead-acid battery comprising
at least one cell including a positive electrode plate, a negative electrode plate, and an electrolyte solution,
wherein the positive electrode plate includes a positive electrode material,
the negative electrode plate includes a negative electrode material and a negative current collector,
the negative electrode material contains a carbonaceous material,
a specific surface area of the carbonaceous material determined by a BET method: Sc satisfies Sc ≥ 650 m²/g,
a content of the carbonaceous material in the negative electrode material: Cc satisfies Cc ≥ 0.5 mass%, and
the valve regulated lead-acid battery is used for compact mobility.

2. A valve regulated lead-acid battery comprising
at least one cell including a positive electrode plate, a negative electrode plate, and an electrolyte solution,
wherein the positive electrode plate includes a positive electrode material,
the negative electrode plate includes a negative electrode material and a negative current collector,
the negative electrode material contains a carbonaceous material,
a specific surface area of the carbonaceous material determined by a BET method: Sc satisfies Sc ≥ 650 m²/g,
a content of the carbonaceous material in the negative electrode material: Cc satisfies Cc ≥ 0.5 mass%,
the valve regulated lead-acid battery is used for a vehicle, and
the vehicle is subjected to idling stop control when a state of charge: SOC of the valve regulated lead-acid battery is equal to or more than a threshold of 90% or more, and is not subjected to the idling stop control when the SOC of the valve regulated lead-acid battery is less than the threshold.

3. The valve regulated lead-acid battery according to claim 1 or 2, wherein the specific surface area Sc is 1,000 m²/g or less.

4. The valve regulated lead-acid battery according to any one of claims 1 to 3, wherein the content Cc is 3 mass% or less.

5. The valve regulated lead-acid battery according to any one of claims 1 to 4, wherein the content Cc is 2 mass% or less.

6. The valve regulated lead-acid battery according to any one of claims 1 to 5, wherein an organic expander is further added to the negative electrode material.

7. The valve regulated lead-acid battery according to claim 6,
wherein the specific surface area Sc satisfies 650 m²/g ≤ Sc ≤ 1,000 m²/g, and an added amount Ce (mass%) of the organic expander in the negative electrode material satisfies Ce > 0.368 Cc + 0.054.

8. The valve regulated lead-acid battery according to claim 7,
wherein the added amount Ce satisfies 0.372 Cc + 0.092 ≤ Ce ≤ 0.373 Cc + 0.249.

9. The valve regulated lead-acid battery according to any one of claims 1 to 8, wherein a ratio of a mass of the negative electrode material to a mass of the positive electrode material: NAM/PAM ratio satisfies the NAM/PAM ratio < 1.21.

10. The valve regulated lead-acid battery according to claim 9,
wherein the positive electrode material includes a first pore having a pore diameter of 1 pm or more and 10 pm or less, and a ratio of the first pore in the positive electrode material is 9% by volume or more.

11. A method of manufacturing the valve regulated lead-acid battery according to claim 1 or 2, comprising:
preparing a negative electrode paste containing a lead powder, the carbonaceous material, water, and sulfuric acid;
producing a non-formed negative electrode plate by applying or filling the negative electrode paste onto or into the negative current collector; and
forming the non-formed negative electrode plate to obtain the negative electrode plate including the negative electrode material and the negative current collector.

12. The method of manufacturing the valve regulated lead-acid battery according to claim 11, wherein the negative electrode paste further contains an organic expander,
the specific surface area Sc satisfies 650 m²/g ≤ Sc ≤ 1,000 m²/g, and
an added amount Ce (mass%) of the organic expander in the negative electrode material satisfies Ce > 0.368 Cc + 0.054.

13. The method of manufacturing the valve regulated lead-acid battery according to claim 12, wherein the added amount Ce satisfies 0.372 Cc + 0.092 ≤ Ce ≤ 0.373 Cc + 0.249.

14. A power storage system comprising:
a valve regulated lead-acid battery;
a vehicle that receives power supply from the valve regulated lead-acid battery; and
a state-of-charge controller that controls a state of charge: SOC of the valve regulated lead-acid battery,
wherein the valve regulated lead-acid battery includes at least one cell including a positive electrode plate, a negative electrode plate, and an electrolyte solution,
the positive electrode plate includes a positive electrode material,
the negative electrode plate includes a negative electrode material and a negative current collector,
the negative electrode material contains a carbonaceous material,
a specific surface area of the carbonaceous material determined by a BET method: Sc satisfies Sc ≥ 650 m²/g,
a content of the carbonaceous material in the negative electrode material: Cc satisfies Cc ≥ 0.5 mass%, and
the vehicle is subjected to idling stop control when the state of charge: SOC of the valve regulated lead-acid battery is equal to or more than a threshold of 90% or more, and is not subjected to the idling stop control when the SOC of the valve regulated lead-acid battery is less than the threshold.

15. The power storage system according to claim 14, wherein the state-of-charge controller charges the valve regulated lead-acid battery at a constant voltage when the SOC of the valve regulated lead-acid battery is less than the threshold.

16. The power storage system according to claim 15, wherein charge at the constant voltage is performed at 2.30 V/cell or more and 2.45 V/cell or less.
